# EUROPÄISCHE PATENTSCHRIFT

(11) **EP 3 766 659 B1**
(45) Veröffentlichungstag und Bekanntmachung des Hinweises auf die Patenterteilung: **30.08.2023**
(21) Anmeldenummer: 20186558.1
(22) Anmeldetag: 17.07.2020
(51) Int. Cl.: B29C 48/12, B29C 48/92, B60R 13/06, F16J 15/10, B29L 31/30, F16J 15/06, B29C 48/025

(54) **VERFAHREN UND VORRICHTUNG ZUR HERSTELLUNG VON DICHTBÄNDERN**
METHOD AND DEVICE FOR PRODUCING SEAL STRIPS
PROCÉDÉ ET DISPOSITIF DE FABRICATION DE BANDES D'ÉTANCHÉITÉ

(30) Priorität: 19.07.2019 DE 102019210772
(43) Veröffentlichungstag der Anmeldung: 20.01.2021
(73) Patentinhaber: GTG Gummitechnik Wolfgang Bartelt GmbH & Co. KG, 89423 Gundelfingen (DE)
(72) Erfinder: Bartelt, Markus, 89423 Gundelfingen a. d. Donau (DE)
(74) Vertreter: Dr. Solf & Zapf Patent- und Rechtsanwalts PartG mbB

(56) Entgegenhaltungen:
- EP-A1- 3 431 250
- WO-A1-2004/013713
- WO-A1-2013/135453
- WO-A1-2014/102051
- DE-A1- 19 743 600
- DE-A1-102005 028 069
- DE-A1-102013 114 775
- DE-A1-102016 116 107
- FR-A1- 2 541 176
- FR-A1- 2 543 486
- JP-A- 2005 231 189

## Beschreibung

Die vorliegende Erfindung betrifft ein Verfahren und eine Vorrichtung zur kontinuierlichen Herstellung von Dichtbändern zum Abdichten von mittels eines Schließelementes schließbaren Öffnungen, insbesondere in Fahrzeugkarosserien.

Derartige Dichtbänder weisen in der Regel ein Hohlprofilband auf, wobei das Dichtband um die Öffnung herum angeordnet ist und das Hohlprofilband beim Schließen der Öffnung z.B. durch eine Fahrzeugtür, den Kofferraumdeckel oder ein Fenster teilweise zwischen der Fahrzeugkarosserie und dem jeweiligen Schließelement zusammengedrückt wird und die Öffnung gegen Eindringen von Zugluft und Feuchtigkeit sowie Geräuschen ins Fahrzeuginnere abdichtet.

Aus der DE 10 2006 027 697 A1 geht beispielsweise ein gattungsgemäßes Dichtband hervor. Dieses weist einen Dichtbereich in Form eines schlauchförmigen Hohlprofilstranges und einen Befestigungsbereich zur Befestigung des Dichtbandes an einer Fahrzeugkarosserie, insbesondere an einem eine Öffnung im Fahrzeug umlaufenden Karosserieflansch auf, der aus zumindest zwei aufeinanderliegenden Blechen der Fahrzeugkarosserie gebildet wird. Dabei sind der Dichtbereich und der Befestigungsbereich des Dichtbandes einteilig ausgeführt. Der Befestigungsbereich weist zudem eine außenliegende Flachseite auf, an der ein Klebeband befestigt ist, mittels dem das Dichtband an das Stegblech angeklebt wird.

Die Herstellung gattungsgemäßer Dichtbänder erfolgt durch Koextrusion. Es wird kontinuierlich ein Endlosdichtband hergestellt und dieses am freien Ende kontinuierlich auf eine Vorratsrolle aufgewickelt und bei der gewünschten Länge abgeschnitten. Das auf die Vorratsrolle aufgewickelte Dichtband weist in der Regel eine Länge von ca. 1000-1200 m, mindestens aber vorzugsweise 750 m, auf. Beim Anwender wird dann das Dichtband von der Vorratsrolle abgewickelt, auf die gewünschte Länge in einzelne Einzelteil-Dichtbänder geschnitten und auf den Karosserieflansch oder die Fahrzeugtür aufgebracht.

Grundsätzlich besteht dabei bei der Herstellung des Dichtbandes das Bestreben, ein möglichst fehlerfreies Dichtband zu produzieren. Fehler sind insbesondere sogenannte "Pickel" bzw. Erhebungen, die, je nach Anforderung des Anwenders, ein bestimmtes Maß, z. B. eine bestimmte Größe (insbesondere Durchmesser) und/oder Höhe, nicht überschreiten dürfen. Weitere mögliche Oberflächenfehler sind z.B. Blasen, Riefen, Lackfehler, Farbschattierungen oder Farbabweichungen. Das Dichtband kann auch Konturenfehler aufweisen, z.B. kann das Dichtband einen vom Soll-Querschnitt abweichenden Querschnitt aufweisen oder die Klebebandposition weicht von der gewünschten Position ab, z.B. ist das Klebeband schief positioniert.

Deswegen ist es beispielsweise aus der EP 1 733 839 B1 bekannt, das Dichtband vor dem Aufwickeln auf die Vorratsrolle zu prüfen, die als fehlerhaft erkannten Bereiche zu markieren und/oder die Anfangs-und/oder Endkoordinaten der fehlerhaften Bereiche zu speichern. Die Markierung erfolgt, zum Beispiel mithilfe eines Tintenstrahldruckers, direkt auf das Dichtband. Des Weiteren kann der gesamte fehlerhafte Bereich markiert werden oder lediglich die Anfangs-und/oder Endkoordinaten. Die fehlerhaften Bereiche werden dann vom Anwender nach dem Abwickeln von der Vorratsrolle und vor dem Aufbringen auf die Karosserie oder die Fahrzeugtür herausgeschnitten. Das Herausschneiden erfolgt dabei auf Basis der vor dem Aufwickeln markierten Bereiche bzw. der gespeicherten Anfangs-und/oder Endkoordinaten.

Des Weiteren ist es gemäß der EP 1 733 839 B1 zusätzlich möglich, bei der Herstellung das Dichtband vor dem Aufwickeln auf die Vorratsrolle auf fehlerhafte Bereiche zu prüfen, diese Bereiche heraus zu schneiden und die entstandenen Strangenden wieder miteinander zu verbinden. Dies ist insbesondere bei sehr langen fehlerhaften Bereichen sinnvoll. Das auf die Vorratsrolle aufgewickelte Dichtband weist somit Stoßstellen auf.

Die Druckschriften FR 2 543 486 A1, EP 3 431 250 A1, DE 10 2005 028069 A1, DE 10 2013 114775 A1 und JP 2005 231189 A offenbaren weitere Verfahren und Vorrichtungen zur Herstellung von Dichtbändern.

Aufgabe der vorliegenden Erfindung ist somit die Bereitstellung eines kontinuierlichen Verfahrens zur Herstellung von, vorzugsweise ein Klebeband aufweisenden, Dichtbändern zum Abdichten von mittels eines Schließelementes schließbaren Öffnungen, insbesondere in Fahrzeugkarosserien, das eine einfache und sichere Qualitätskontrolle gewährleistet. Zudem soll der Abfall minimiert werden.

Dabei kann es sich bei den herzustellenden Dichtbändern um Einzelteil- bzw. Fertigteil-Dichtbänder und/oder um Rollenwaren-Dichtbänder, welche auf eine Vorratsrolle aufgewickelt sind, handeln. Einzelteil- bzw. Fertigteil-Dichtbänder weisen bereits die für die spätere Anwendung gewünschte Länge auf. Rollenwaren-Dichtbänder werden später auf die für die spätere Anwendung gewünschte Länge geschnitten. Ein Rollenwaren-Dichtband soll vorzugsweise eine Länge von mindestens 500 m, bevorzugt mindestens 750 m aufweisen.

Weitere Aufgabe ist die Bereitstellung einer Vorrichtung zur Herstellung der Dichtbänder.

Diese Aufgaben werden durch ein Verfahren gemäß Anspruch 1 und eine Vorrichtung gemäß Anspruch 17 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:

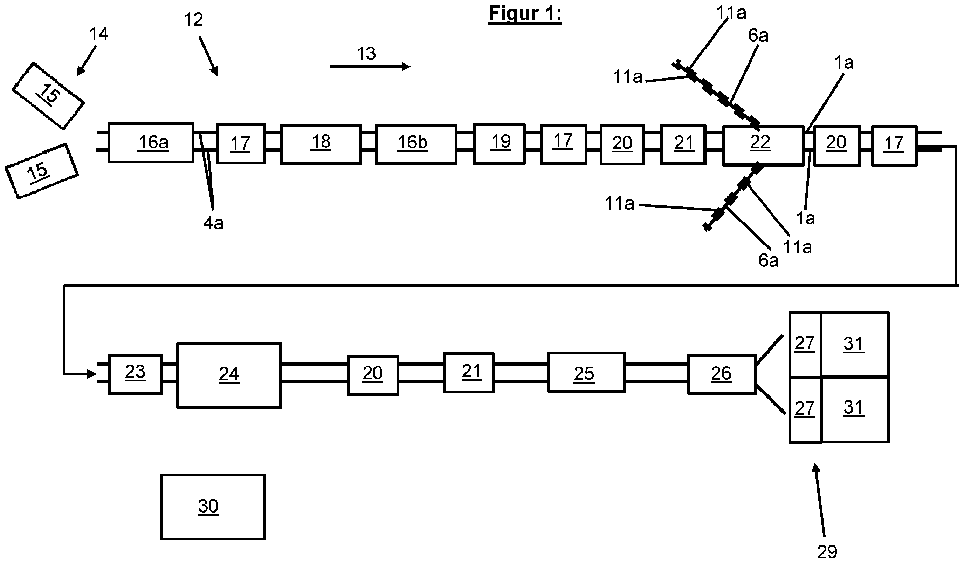

- Figur 1:: Stark vereinfacht und schematisch eine erfindungsgemäße Vorrichtung zur Herstellung von Dichtbändern gemäß einer ersten Ausführungsform der Erfindung
- Figur 2:: Beispielhaft einen Querschnitt eines herzustellenden Dichtbandes
- Figur 3:: Stark vereinfacht und schematisch eine Weiterverarbeitungsanlage
- Figur 4:: Stark vereinfacht und schematisch eine erfindungsgemäße Vorrichtung zur Herstellung von Dichtbändern gemäß einer weiteren Ausführungsform der Erfindung
- Figur 5:: Stark vereinfacht und schematisch eine Seitenansicht eines Endlosdichtbands mit Längenmarkierungen

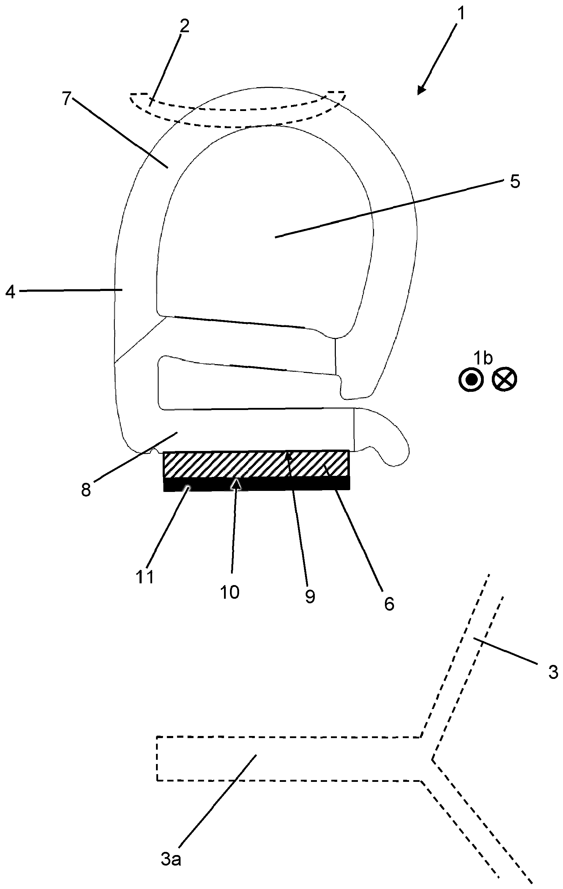

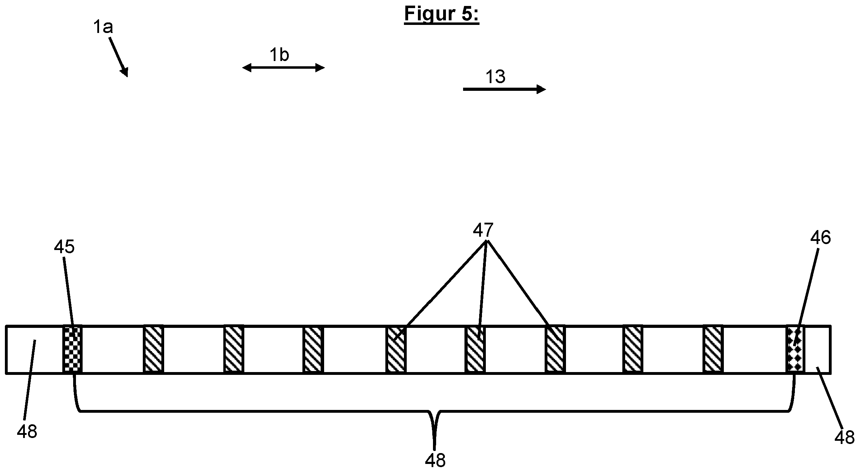

Ein erfindungsgemäß herzustellendes Dichtband 1;32;33 (Fig. 2,5) dient zum Abdichten von mittels eines beweglichen Schließelementes 2 schließbaren Öffnungen, bevorzugt in Kraftfahrzeugkarosserien 3, insbesondere Automobilkarosserien. Das Schließelement 2 ist mit der übrigen Fahrzeugkarosserie 3 relativ zu dieser bewegbar, insbesondere schwenkbar und/oder verschiebbar, verbunden. Beispielsweise handelt es sich bei dem Schließelement 2 um eine Fahrzeugtür, einen Kofferraumdeckel, ein Cabrioverdeck oder ein Fenster.

Das Dichtband 1;32;33 weist einen schlauchförmigen Hohlprofilstrang 4 mit einem sich in eine Längsrichtung 1b des Dichtbands 1;32;33 durchgehend durch den Hohlprofilstrang 4 durch erstreckenden Kanal 5 sowie ein Klebeband 6 zur Befestigung des Dichtbandes 2 an einem die abzudichtende Öffnung umlaufenden Öffnungsrahmen, insbesondere an einem die Öffnung der Fahrzeugkarosserie 3 umlaufenden Karosserieflansch 3a, oder an einem Stegblech oder dergleichen, oder auch an dem Schließelement 2 selber, auf.

Der Hohlprofilstrang 4 ist in seine Umfangsrichtung gesehen in einen Dichtbereich 7 und einen Befestigungsbereich 8 unterteilt, wobei der Dichtbereich 7 und der Befestigungsbereich 8 miteinander fest, bevorzugt durch Koextrusion, verbunden sind. Sie sind also zusammen vulkanisiert. Der Befestigungsbereich 8 besteht vorzugsweise aus einem weniger verformbaren Material als der Dichtbereich 7. Dichtbereich 7 und Befestigungsbereich 8 können aber auch aus demselben Material bestehen und einstückig ausgebildet sein.

Zudem muss das Dichtband 1;32;33 nicht als Hohlprofil ausgebildet sein, sondern kann auch als Vollprofil ausgebildet sein. Auch kann es mehrere Hohlkammern aufweisen. Es kann eine beliebige Querschnittsform aufweisen.

Des Weiteren weist der Befestigungsbereich 8 eine Flachseite bzw. eine ebene Fläche 9 auf, auf die das, insbesondere doppelseitig klebende, sich in Längsrichtung 1a des Dichtbandes 1;32;33 erstreckende Klebeband 6 aufgebracht, insbesondere aufgeklebt ist. Das Klebeband 6 weist dem Befestigungsbereich 8 abgewandt eine, bevorzugt flache, ebenflächige, Klebefläche 10 auf, die durch ein von der Klebefläche 10 abziehbares, die Klebefläche 10 schützendes Abdeckband 11 abgedeckt ist.

Im Rahmen der Erfindung liegt es dabei auch, dass der Befestigungsbereich 8 anders ausgebildet ist und zur Befestigung anstelle des Klebebands 6 oder zusätzlich zu diesem ein anderes Befestigungsmittel, z.B. einen an sich bekannten U-Kanal, eine Kleberaupe oder eine Einclipsleiste aufweist.

Zudem weist das Dichtband 1;32;33 vorzugsweise in den Kanal 5 mündende, an sich bekannte, Entlüftungsbohrungen (nicht dargestellt) auf. Die Entlüftungsbohrungen erstrecken sich durch die Wandung des Dichtbereichs 7 hindurch in den Kanal 5 und gegebenenfalls, je nach Lage, durch den Befestigungsbereich 8 durch.

Die erfindungsgemäße Vorrichtung 12 weist gemäß einer ersten bevorzugten Ausführungsform in eine Produktionsrichtung bzw. Extrusionsrichtung 13 einander nachgeordnet eine Extrusionsstation 14 mit vorzugsweise zwei Extrudern 15, einen ersten Heißluftkanal 16a, einen Kühlkanal 17, eine Lackierstation 18, einen weiteren Heißluftkanal 16b, eine Beschriftungsstation 19, einen weiteren Kühlkanal 17, einen Abzug 20, eine Durchhangsteuerungsstation 21, vorzugsweise eine Laminierstation 22, einen weiteren Abzug 20, einen weiteren Kühlkanal 17, eine Oberflächen- und Konturenprüfstation 23, eine erfindungsgemäße Markierungsstation 24, einen weiteren Abzug 20, eine weitere Durchhangsteuerungsstation 21, vorzugsweise eine Bohrstation 25, eine Trennstation 26 vorzugsweise zwei Speicherstationen 27 und eine Aufwickelstation 29 auf. Nachgeordnet im Sinne der Erfindung ist hierbei im Sinne der Reihenfolge der Verfahrensschritte zu verstehen.

Des Weiteren weist die erfindungsgemäße Vorrichtung 12 eine Steuereinrichtung 30 mit einem Steuerprogramm zur Steuerung des gesamten Herstellungsverfahrens auf. Die Steuereinrichtung 30 verarbeitet und protokolliert kontinuierlich, also in Echtzeit, Produktionsprozessdaten, wie Extrusionsdruck und/oder Materialtemperatur beim Extrudieren und/oder Extrusionsgeschwindigkeit und/oder Informationen über die verwendeten Materialien und/oder die Fördergeschwindigkeit und/oder Vulkanisationsparameter und/oder die Extruderdrehzahl. Dabei liegt es im Rahmen der Erfindung, eine beliebige Kombination der vorgenannten Produktionsprozessdaten zu verwenden. Bevorzugt werden alle vorgenannten Produktionsprozessdaten verwendet. Vulkanisationsparameter sind bevorzugt Temperatur des ersten und zweiten Heißluftkanals 16a;b und/o die UHF (Ultra-High-Frequency) -Leistung des Magnetrons des ersten Heißluftkanals 16a. Und bei den Informationen über die Materialien handelt es sich bevorzugt um Chargennummer und/oder Herstellungsdatum und/oder die Materialart des verwendeten Rohmaterials. Die Materialart ist insbesondere charakterisiert durch den Werkstoff an sich (z.B. EPDM) sowie vorzugsweise zusätzlich zumindest eine mechanische Festigkeitseigenschaft, vor allem die Shore-Härte.

Die Vorrichtung 12 gemäß der ersten Ausführungsform dient ausschließlich zur Herstellung von verbindungsstellenfreien Rollenwaren-Dichtbändern 1.

Wie bereits erläutert, weist die Extrusionsstation 14 zumindest einen, vorzugsweise zwei, Extruder 15 auf. Die beiden Extruder 15 dienen in an sich bekannter Weise zum Aufschmelzen der Materialien für den Dichtbereich 7 und den Befestigungsbereich 8 des Rollenwaren-Dichtbands 1. Zudem dienen die beiden Extruder 15 in an sich bekannter Weise zur Formgebung, indem die aufgeschmolzenen Massen unter Druck kontinuierlich aus einer gemeinsamen formgebenden Öffnung der beiden Extruder 15 herausgepresst werden. Dabei werden die beiden Massen miteinander verbunden (Koextrusion). Es entsteht ein Endlosprofilstrang 4a. Vorzugsweise weist die Extrusionseinrichtung 14 dabei zwei Öffnungen auf, so dass parallel zwei Endlosprofilstränge 4a erzeugt werden.

Die Extrusionseinrichtung 14 weist zudem vorzugsweise in an sich bekannter Weise Mittel zur Einbringung der Entlüftungsbohrungen in vorbestimmten Abständen auf. Hierbei handelt es sich z.B. um Mittel, welche die Wandung/den Befestigungsbereich des Endlosprofilstrangs 4a kurz nach dem Austritt aus der Öffnung durchstoßen bzw. durchstechen.

Die mehrfach vorhandenen Heißluftkanäle 16a;b dienen in an sich bekannter Weise zum Vulkanisieren des Materials des jeweiligen Endlosprofilstrangs 4a.

Die ebenfalls mehrfach vorhandenen Kühlkanäle 17 dienen an sich bekannter Weise zum Abkühlen des Endlosprofilstrangs 4a.

Die Lackierstation 18 dient in an sich bekannter Weise zum Lackieren des Endlosprofilstrangs 4a.

Die Beschriftungsstation 19 dient an sich bekannter Weise zum Beschriften des Endlosprofilstrangs 4a mit für das Produkt spezifizierten Angaben. Insbesondere wird die nach gesetzlichen Vorgaben erforderliche Profilkennung bzw. Profilkennzeichnung gemäß der jeweils geltenden VDA-Norm aufgebracht. Diese enthält vorzugsweise Angaben zu Hersteller und/oder Fertigungsdatum und/oder Uhrzeit und/oder Profilbezeichnung.

Die ebenfalls mehrfach vorhandenen Abzüge dienen in an sich bekannter Weise zum Ziehen bzw. Abziehen des Endlosprofilstrangs 4a, damit das Endlosprofilstrangs 4a auf Zug ist.

Die ebenfalls mehrfach vorhandenen Durchhangsteuerungsstationen 21 dienen in an sich bekannter Weise dazu, die Spannung des Endlosprofilstrangs 4a aufrecht zu erhalten bzw. zu regulieren.

Die Laminierstation 22 dient in an sich bekannter Weise dazu, ein Endlosklebeband 6a auf den Endlosprofilstrang 4a aufzulaminieren. Dabei wird ein Endlosdichtband 1a gebildet. Insbesondere ist das endlose Klebeband 6a doppelseitig klebend ausgebildet und deshalb vor dem Auflaminieren beidseitig mit einem endlosen Abdeckband 11a abgedeckt. Infolgedessen weist die Laminierstation 22 Mittel zum Abziehen des einen Abdeckbands 11a von dem Endlosklebeband 6a auf. Zudem weist die Laminierstation 22 Mittel zum Andrücken des Endlosklebebands 6a an den Endlosprofilstrang 4a auf.

Die Laminierstation 22 ist selbstverständlich nur dann vorhanden, wenn Rollenwaren-Dichtbänder 1 mit Klebeband 6 hergestellt werden.

Die Oberflächen- und Konturenprüfstation 23 dient zur Prüfung der Oberfläche des Endlosdichtbands 1a, insbesondere des Endlosprofilstrangs 4a, und zur Konturen bzw. Dimensionsvermessung des Endlosdichtbands 1a, insbesondere des Endlosprofilstrangs 4a. Die möglichen Oberflächen- und Konturenfehler sind bereits oben beschrieben worden. Was als Oberflächen- und Konturenfehler bewertet wird, ist im Steuerprogramm der Oberflächen- und Konturenprüfstation 23 hinterlegt. Zur Prüfung weist die Oberflächen- und Konturenprüfstation 23 entsprechende Prüfeinrichtungen bzw. Prüfmittel auf. Mittels dieser Prüfeinrichtungen werden die Oberfläche und die Kontur optisch geprüft bzw. inspiziert und die entsprechenden Informationen an die Steuereinrichtung 30 gesendet. Derartige Prüfeinrichtungen werden z.B. von der Firma Pixargus auf dem Markt vertrieben.

An die Oberflächen- und Konturenprüfstation 23 schließt sich, wie bereits erläutert, die erfindungsgemäße Markierungsstation 24 an. Die Markierungsstation 24 dient erfindungsgemäß zur Markierung des Endlosdichtbands 1a mit einer Längenmarkierung, vorzugsweise einem Code. Die Längenmarkierung wird in Längsrichtung 1b des Endlosdichtbands 1a gesehen in einem regelmäßigen, vorbestimmten Abstand auf das Endlosdichtband 1a aufgebracht, vorzugsweise aufgedruckt. Vorzugsweise liegt der Abstand zwischen den einzelnen Längenmarkierungen 45;46;47 bei 2,5 bis 10 m, bevorzugt 3 bis 5 m.

Die Längenmarkierungen können auf den Endlosprofilstrang 4a oder auf das Abdeckband 11a des Klebebands 6 aufgebracht werden. Ist ein Klebeband 6 vorhanden, werden die Längenmarkierungen vorzugsweise auf das Abdeckband 11a aufgebracht. Denn diese sind in der Regel kontrastreicher als direkt auf den Endloshohlprofilstrang 4 aufgebrachte Längenmarkierungen. Aus diesem Grund sind diese besser lesbar, was die Prozesssicherheit weiter verbessert. Auch trocknet die auf das Abdeckband 11;11a aufgebrachte Tinte schneller als die auf den Endloshohlprofilstrang 4 aufgebrachten Längenmarkierungen.

Da das Abdeckband 11 beim späteren Anwender abgezogen wird, sind die Längenmarkierungen aber in der Endanwendung nicht mehr sichtbar und können somit nicht störend wirken.

Dabei wird als Längenmarkierung insbesondere ein Startcode 45, ein Endcode 46 und dazwischen mehrere Längencodes 47 aufgebracht (Fig. 5). Der Startcode 45 definiert den Anfang eines Dichtbandabschnittes 48 des Endlosdichtbands 1a, der Endcode 46 definiert das Ende dieses Dichtbandabschnittes 48. Die Längencodes 47 geben die Länge bzw. Position bzw. Metrage (bevorzugt in cm) des Dichtbandabschnittes 48 ab dem Startcode 45 an. Bei den Codes 45;46;47 handelt es sich um maschinenlesbare maschinenverarbeitbare bzw. elektronisch lesbare bzw. verarbeitbare Codes, vorzugsweise um QR-Codes oder Strichcodes oder elektrische Codes oder RFID (radio-frequency identification) Codes oder magnetische Codes.

Dabei enthalten alle Codes 45;46;47 vorzugsweise zusätzlich eine oder mehrere der folgenden Informationen:
- Packstücknummer (Vorratsrollennummer)
- Fertigungsauftragsnummer
- Datum und Uhrzeit (bevorzugt auf die Sekunde genau)
- Hersteller-Kennzeichnung
- Artikelnummer

Wie bereits erläutert, weist die erfindungsgemäße Vorrichtung 12 vorzugsweise zudem eine Bohreinrichtung 25 auf. Diese dient, falls dies gewünscht ist und nicht zuvor erfolgt ist, zum Einbringen von Bohrungen, vorzugsweise Entlüftungsöffnungen, in den Endlosprofilstrang 4a.

Die Trennstation 26 dient zur Trennung der beiden Endlosdichtbänder 1a voneinander und zur Übergabe der Endlosdichtbänder 1a an eine jeweilige Aufwickeleinrichtung 31 der Aufwickelstation 29.

Da vorzugsweise zwei zueinander parallele Endlosdichtbänder 1a erzeugt werden, weist die Aufwickelstation 29 vorzugsweise zwei nebeneinander angeordnete Aufwickeleinrichtungen 31 auf. Jede Aufwickeleinrichtung 31 weist dabei jeweils vorzugsweise mindestens eine Vorratsrolle zum Aufwickeln eines hergestellten Rollenwaren-Dichtbands 1 auf. Zudem weist jede Aufwickeleinrichtung 31 Mittel zum Abschneiden bzw. Zerteilen des Endlosdichtbands 1a auf. Außerdem weist jede Aufwickeleinrichtung 31 Mittel zur Erkennung des Startcodes und des Endcodes auf. Hierbei handelt es sich vorzugsweise um Sensoren.

Im Folgenden wird nun das erfindungsgemäße Herstellungsverfahren mittels der erfindungsgemäßen Vorrichtung 12 gemäß der ersten Ausführungsform näher erläutert:
Wie bereits erläutert, werden in den beiden Extrudern 15 der Extrusionseinrichtung 14 vorzugsweise zwei unterschiedliche Polymermischungen, bevorzugt zwei unterschiedliche Kautschukmischungen, für die Herstellung des Dichtbereichs 7 und des Befestigungsbereichs 8 bereitgestellt. Das Material wird insbesondere manuell in die Extruder 15 gegeben.

Am hinteren Ende der Vorrichtung 12 wird, bevorzugt ebenfalls manuell, jeweils eine Vorratsrolle in die jeweilige Aufwickeleinrichtung 31 gestellt. Vorzugsweise befindet sich die Vorratsrolle in einer vom Anwender bereitgestellten Transportbox. Die Vorratsrolle wird, falls notwendig, insbesondere manuell, ausgerichtet.

Nun kann die erfindungsgemäße Vorrichtung 12 bzw. die kontinuierliche Herstellung gestartet werden. Wie bereits erläutert, werden in der Extrusionseinrichtung 14 vorzugsweise zwei zueinander parallele Endlosprofilstränge 4a erzeugt, die in die Extrusionsrichtung 13 gesehen nacheinander die zuvor beschriebenen Stationen 16a-26 durchlaufen.

Dabei wird zunächst von der Bedienperson die Oberfläche und die Kontur manuell geprüft. Solange die Endlosdichtprofile 1a von der Bedienperson für nicht in Ordnung befunden wird, werden die Endlosdichtprofile 1a, z.B. nach der Trennstation 26, aus der Vorrichtung 12 ausgeleitet. Es kann aber auch vorher oder später ausgeleitet werden. Sobald die Bedienperson die Endlosdichtprofile 1a für in Ordnung befindet, wird von der Bedienperson der Startknopf gedrückt und das erfindungsgemäße Verfahren gestartet.

Die Startfreigabe kann aber selbstverständlich auch automatisiert mittels der Steuereinrichtung 30 erfolgen. Dazu werden von der Steuereinrichtung 30 die Produktionsdaten und dabei insbesondere die in der Oberflächen- und Konturenprüfstation 23 ermittelten Prüfwerte ausgewertet. Sind Oberfläche und Kontur in Ordnung und stimmen auch alle anderen Produktionsprozessparameter, wird das Verfahren automatisiert gestartet.

Nach dem Starten des Verfahrens wird sofort von der Steuereinrichtung 30 die Markierungsstation 24 aktiviert und in dieser ein Startcode 45 auf das Endlosdichtband 1a, bevorzugt auf das Abdeckband 11a des Endlosdichtbands 1a, aufgebracht. Danach werden in regelmäßigen, vorbestimmten Abständen die Längencodes 47 auf das Endlosdichtband 1a, bevorzugt auf das Abdeckband 11a des Endlosdichtbands 1a, aufgebracht.

Sobald der Bereich des Endlosdichtbands 1a mit dem Startcode 45 in der jeweiligen Aufwickeleinrichtung 31 angekommen ist, wird das Endlosdichtband 1a vor dem Startcode 45 zerteilt bzw. abgeschnitten, so dass der sich vor dem Startcode 45 befindliche Teil des Endlosdichtbandes 1a von dem Endlosdichtband 1a abgetrennt wird. Der Startcode 45 wird von den Sensoren in der jeweiligen Aufwickeleinrichtung 31 erkannt.

Das den Startcode 45 aufweisende freie Ende des Endlosdichtbands 1a wird, insbesondere manuell, oder auch automatisiert in die Vorratsrolle eingefädelt und der Wickelvorgang automatisiert gestartet.

Das Endlosdichtband 1a wird dabei so lange auf die Vorratsrolle automatisiert aufgewickelt, bis der Endcode 46 von dem Sensor der Aufwickeleinrichtung 31 erkannt wird. Sobald der Endcode 46 erkannt wird, wird das Endlosdichtband 1a in der Aufwickeleinrichtung 31 hinter dem Endcode 46 zerteilt bzw. abgeschnitten. Hierzu weist die Aufwickeleinrichtung 31 die Schneidmittel auf.

Die gesamte Steuerung der Aufwickeleinrichtungen 31 erfolgt dabei mittels der zentralen Steuereinrichtung 30. Das heißt, die Sensoren stehen mit der Steuereinrichtung 30 in Verbindung, welche die von den Sensoren ankommenden Signale verarbeitet und die Aufwickeleinrichtungen 31, insbesondere die Vorratsrollen und die Schneidmittel entsprechend ansteuert.

Dann wird die Vorratsrolle mitsamt dem darauf aufgewickelten Rollenwaren-Dichtband 1 und vorzugsweise mitsamt der Transportbox, insbesondere manuell, aus der Aufwickelstation 29 entnommen und eine neue, leere Vorratsrolle eingelegt.

Nun kann die Herstellung von Neuem beginnen. Dabei läuft vorzugsweise die Herstellung kontinuierlich weiter und das neue Endlosdichtband 1a wird in der jeweiligen Speicherstation 27 zwischengespeichert, bis das freie Ende in die neue Vorratsrolle eingefädelt wird.

Dabei erfolgt die Wicklung der beiden parallelen Endlosdichtbänder 1a vorzugsweise derart versetzt, dass die Bedienperson beide Vorratsrollen jeweils zeitversetzt hineinstellen und/oder herausnehmen kann.

In der Oberflächen- und Konturenprüfstation 23 erfolgt nun erfindungsgemäß, wie zuvor beschrieben, die Prüfung der Oberfläche und der Kontur des Endlosdichtbands 1a, insbesondere des Endlosprofilstrangs 4a, und die Vermessung der Dimensionen des Endlosdichtbands 1a, insbesondere des Endlosprofilstrangs 4a.

Im Rahmen der Erfindung kommt der Markierungsstation 24 in Kombination mit der Oberflächen- und Konturenprüfstation 23 und der Steuereinrichtung 30 dabei eine besondere Bedeutung zu, da festgelegt wird, wann der Startcode 45 und wann der Endcode 46 gesetzt werden.

Wann bzw. bei welcher Länge nach dem Startcode 45 der Endcode 46 gesetzt wird, hängt dabei unter anderem von dem Ergebnis der Prüfung und Vermessung des Endlosdichtbands 1a in der Oberflächen- und Konturenprüfstation 23 ab. Die maximale Länge, die auf eine Vorratsrolle aufgewickelt werden kann, ist dabei durch die Vorratsrolle vorgegeben und im Steuerprogramm der Steuereinrichtung hinterlegt. Die maximale Länge kann dabei selbstverständlich auch geändert werden. Sie liegt in der Regel bei 500 bis 2000 m, bevorzugt bei 750 bis 1200 m. Zudem ist eine Mindestlänge festgelegt und hinterlegt. Die Mindestlänge liegt vorzugsweise bei mindestens 400 m, bevorzugt mindestens 500 m, bevorzugt bei mindestens 750 m.

Ziel ist es dabei selbstverständlich immer, ein vollkommen fehlerfreies Rollenwaren-Dichtband 1 mit der maximalen Länge herzustellen. Dies ist aber nicht immer möglich. Infolgedessen wird vor der Herstellung festgelegt, welche Fehler noch tolerierbar sind und welche nicht. Beispielsweise kann festgelegt werden, dass Oberflächenfehler in Form von "Pickeln" bzw. Erhebungen bis zu einem definierten maximalen Durchmesser, z.B. bis > 2 mm noch tolerierbar sind. Zudem wird z.B. festgelegt, wie hoch die maximale Anzahl von (tolerierbaren) Fehlern auf eine bestimmte Länge des Endlosdichtbands 1a sein darf. Hier kann auch eine Abstufung bezüglich der Durchmesser der Erhebungen vorgenommen werden. Beispielsweise kann festgelegt werden, dass eine maximale Anzahl von Erhebungen, z.B. unabhängig von deren Durchmesser, auf eine bestimmte Länge toleriert werden kann. Z.B. sind 26 Erhebungen auf 1200 m Länge erlaubt. Alle diese Daten werden zuvor, in dem Steuerprogramm der Steuereinrichtung 30 festgelegt bzw. hinterlegt.

Zum Beispiel werden folgende Maßgaben festgelegt:

| **Meterzahl** | **zul. Fehleranzahl** | **zul. Fehlerart** | **zul. Fehlergröße** |
|---|---|---|---|
| 250 m | 8 Stk. | Blase | < 1,5 mm |
| | 0 | Kontur | Zeichnungstoleranzen |
| 500 m | 15 Stk. | Blase | < 1,5 mm |
| | 0 | Kontur | Zeichnungstoleranzen |
| 1000 m | 22 Stk. | Blase | < 1,5 mm |
| | 0 | Kontur | Zeichnungstoleranzen |

Ist beispielsweise die maximale Fehleranzahl an Fehlern vor der maximalen Ziellänge des späteren Rollenwaren-Dichtbands 1 erreicht, wird der Endcode 46 früher gesetzt. Dabei wird z.B. die Länge des Endlosdichtbands 1a in Relation zu der Anzahl der Fehler gesetzt. Liegt der Wert bereits nach einer Länge vor der maximalen Länge bei dem vorgegebenen Wert, wird der Endcode 46 gesetzt.

Werden beispielsweise auf 250 m bereits 8 Blasen ≥ 1,5 mm detektiert, wird ein Endcode 46 gesetzt. Denn dann ist die Wahrscheinlichkeit zu groß, dass weitere Fehler produziert werden. Sind erst 7 Blasen ≥ 1,5 mm detektiert, wird noch kein Endcode 46 gesetzt und die Produktion läuft weiter. Die Steuereinrichtung 30 berechnet dabei automatisiert auf Basis der zuvor festgelegten Vorgaben, wann ein Endcode 46 gesetzt wird. Diese Berechnung unter Berücksichtigung der Fehler erfolgt vorzugsweise dynamisch mittels des Steuerprogramms. Das heißt, es wird z.B. auf Basis der detektierten Fehler pro Länge des Endlosdichtbands 1a die Wahrscheinlichkeit der zukünftigen Fehler berechnet und daraufhin automatisiert bestimmt, wann der Endcode gesetzt wird.

Die Festlegung wann ein Endcode 46 gesetzt wird basiert also auf Wahrscheinlichkeitsberechnungen anhand der Länge des Endlosdichtbands 1a und der Anzahl der detektierten Fehler. Andererseits wird der Endcode 46 nach der zuvor definierten Meterzahl gesetzt, sofern keine Fehler detektiert werden.

Hierzu werden von der Oberflächen- und Konturenprüfstation 23 die gemessenen Werte an die Steuereinrichtung 30 gesendet. Die Oberflächen- und Konturenprüfstation 23 kann dabei bereits eine Kategorisierung der Fehler, z.B. anhand des Durchmessers vornehmen. Dies kann aber auch in der Steuereinrichtung 30 erfolgen. Die Steuereinrichtung 30 sendet dann ein entsprechendes Signal an die Abdeckbandbeschriftungsstation 24, um die Aufbringung des Endcodes auszulösen. Nach dem Endcode wird zudem, vorzugsweise in einem ebenfalls im Steuerprogramm hinterlegten Abstand, der nächste Startcode gesetzt. Auch hierzu sendet die Steuereinrichtung 30 ein entsprechendes Signal an die Abdeckbandbeschriftungsstation 24. Das entstehende Zwischenstück zwischen dem Endcode 46 und dem nächsten Startcode 45 wird, insbesondere automatisiert, heraus geschnitten und z.B. für die Qualitätsprüfung verwendet.

Sofern das Endlosdichtband 1a bereits die vorgegebene Mindestlänge erreicht hat, wird es auf die Vorratsrolle aufgewickelt und die Vorratsrolle an den jeweiligen Endanwender übergeben.

Hat das Endlosdichtband 1a die geforderte Mindestlänge noch nicht erreicht, wird die Vorratsrolle aussortiert und anderweitig entweder zu Rollenwaren-Dichtbändern 33 oder Einzelteil-Dichtbändern 32 verarbeitet, worauf weiter unten näher eingegangen wird. Die Vorratsrolle wird dabei vorzugsweise mit einem Etikett oder einer anderen Art der Markierung versehen, welche Informationen über das darauf aufgewickelte Rollenwaren-Dichtband 1 enthält, damit dieses zugeordnet werden kann. Die Generierung des Etiketts erfolgt vorzugsweise automatisiert. Hierzu ist die Steuereinrichtung 30 vorzugsweise mit dem Warenwirtschaftssystem verbunden.

Wird allerdings, falls nicht tolerierbare Fehler im Steuerprogramm hinterlegt sind, ein nicht tolerierbarer Fehler von der Oberflächen- und Konturenprüfstation 23 festgestellt, wird von der Oberflächen- und Konturenprüfstation 23 ebenfalls an die Steuereinrichtung 30 und von dieser an die Markierungsstation 24 ein entsprechendes Signal übermittelt, so dass die Markierungsstation 24 nach dem fehlerhaften Bereich einen Endcode 46 auf das Endlosdichtband 1a, vorzugsweise auf das Abdeckband 11, aufbringt. Die Vorratsrolle mit dem fehlerhaften Rollenwaren-Dichtband 1 wird dann ebenfalls aussortiert und anderweitig verarbeitet.

Während des gesamten Herstellungsprozesses werden alle Fehler und deren Lage auf dem Endlosdichtband 1a und damit auf dem späteren Rollenwaren-Dichtband 1 anhand der Start- und Endcodes 45;46 und der Längencodes mittels des Steuerprogramms automatisiert gespeichert bzw. protokolliert bzw. im Steuerprogramm hinterlegt. Bei den Pickeln bzw. Erhebungen kann insbesondere auch deren Abmessungen (z.B. Durchmesser) abgespeichert werden. Und/oder es kann eine Klassifizierung der Fehler anhand ihrer Abmessungen in verschiedene Klassen/Kategorien vorgenommen werden. Erfolgt die Klassifizierung bereits in der Oberflächen- und Konturenprüfstation 23, werden somit vorgefilterte Informationen an die Steuereinrichtung 30 gesendet. Zudem kann abgespeichert werden, zwischen welchen Längencodes 47 die Fehler, insbesondere die Pickel bzw. Erhebungen, liegen.

Die von der Steuereinrichtung 30 gespeicherten Produktionsdaten dienen zur Qualitätskontrolle und zur Abfallvermeidung. Denn die von der Steuereinrichtung 30 gespeicherten Produktionsprozessdaten und dabei insbesondere die festgestellten Oberflächen- und Konturenfehler und deren Lage werden vorzugsweise dazu verwendet, das Verfahren derart zu überwachen und zu steuern, dass Oberflächen - und Konturenfehler reduziert werden bzw. die Qualität des Verfahrens verbessert wird. Beispielsweise stellt die Steuereinrichtung 30 fest, dass sich Konturenfehler bei einem erhöhten Extruderdruck häufen. Infolgedessen wird automatisiert der Extruderdruck abgesenkt. Wird im späteren Verlauf erneut ein Anstieg des Extruderdrucks festgestellt, steuert die Steuereinrichtung 30 bereits frühzeitig die Extrusionsstation 14 so an, dass der Extruderdruck absinkt, bevor er den kritischen Wert erreicht. Oberflächen - und Konturenfehler aufgrund eines erhöhten Extruderdrucks werden dadurch vermieden bzw. den Oberflächen - und Konturenfehlern wird vorgebeugt. Es handelt sich somit um ein selbstlernendes System. Es werden von dem Steuerprogramm automatisiert auf Basis der laufend gespeicherten bzw. hinterlegten Produktionsprozessdaten Vorhersagen getroffen und auf Basis der Vorhersagen gezielte Gegenmaßnahmen eingeleitet bzw. das Verfahren gesteuert, in dem bestimmte Prozessparameter angepasst werden.

Das Ziel ist somit einerseits die Anzahl der Fehler zu minimieren bzw. deren Auftreten zu vermeiden und/oder vorzubeugen und somit das Verfahren kontinuierlich automatisiert zu optimieren.

Die Qualität des Verfahrens kann z.B. auch verbessert werden, indem Anlagenstörungen vermieden werden bzw. diesen vorgebeugt wird, indem diese und die dazugehörigen Parameter aufgezeichnet werden und bei erneutem Auftreten der entsprechenden Parameter vorzeitig gezielt Gegenmaßnahmen eingeleitet werden. Anlagenstörungen sind z.B. Ausfall einzelner Stationen 16a-26.

Zudem kann die Qualität des Verfahrens analog durch vorbeugende Instandhaltung verbessert werden.

Auch kann die Qualität des Verfahrens durch Verbesserung der Qualität des Produkts verbessert werden, indem z.B. festgestellt wird, dass eine Eigenschaft des Produkts (z.B. Tapehaftung) bei bestimmten Parametern einer oder mehrerer Stationen 16a-26 besonders gut ist.

Die Steuereinrichtung 30 mit dem dazugehörigen Steuerprogramm gibt somit die Möglichkeit, diverse Eingriffsgrenzen zu definieren, egal welcher Art, und anhand dieser die Funktion der erfindungsgemäßen Vorrichtung 12 und das erfindungsgemäße Produktionsverfahren sehr variabel zu steuern.

Für die Qualitätssicherung kann zum Beispiel auch protokolliert bzw. gespeichert werden, welche Charge an Polymermischung zu welchem Zeitpunkt, also im Bereich welcher Längenmarkierungen, verwendet wurde. Dies ist vorteilhaft, da auch Fehler materialbedingt entstehen können.

Um diese automatisierte Steuerung bzw. Regelung des Verfahrens realisieren zu können, ist aber eine genaue Kenntnis über die Art, Anzahl und Lage der Fehler notwendig. Und dies gelingt erfindungsgemäß durch die Aufbringung der Längenmarkierungen in regelmäßigen Abständen. Denn aufgrund der Elastizität des Endlosdichtbands 1a und des Schlupfes (insbesondere aufgrund des lackierten Endlosdichtbands 1a) ergibt sich bei der herkömmlichen Längenmessung des Endlosdichtbands 1a in der Regel ein Fehler von ca. 5 Metern auf 1000 Meter Länge Endlosdichtband 1a. Dadurch ist eine erfindungsgemäße exakte Steuerung nicht möglich. Aufgrund der regelmäßigen Längenmarkierungen hat die Steuereinrichtung 30 aber die exakte Information, an welcher Position, eine fehlerhafte Stelle vorhanden ist.

Zudem ist auch auf Basis der regelmäßigen Längenmarkierungen eine regelmäßige Synchronisation der einzelnen Einrichtungen der erfindungsgemäßen Vorrichtung 12 möglich. Denn die Längenmarkierungen werden, insbesondere an mehreren in die Produktionsrichtung 13 einander nachgeordneten Stellen der Vorrichtung 12, zur automatisierten Erfassung der Längenposition des Endlosdichtbands 1a und/oder der Dichtbandabschnitte 48 verwendet.

Vorteil des erfindungsgemäßen, automatisierten Herstellungsverfahrens ist somit, dass eine sehr genaue Qualitätskontrolle sowie eine effektive proaktive Abfallvermeidung möglich ist. Dies spart auch enorme Kosten.

Die erfindungsgemäßen Längenmarkierungen sind aber nicht nur für das erfindungsgemäße Herstellungsverfahren vorteilhaft.

Des Weiteren dienen sie nämlich gemäß einem weiteren Aspekt der Erfindung dazu, festzulegen, in welcher Weise die aussortierten Vorratsrollen mit den fehlerhaften, aber verbindungsstellenfreien Rollenwaren-Dichtbändern 1 weiterver-arbeitet werden können.

Dies wird insbesondere von dem Steuerprogramm der Steuereinrichtung 30 anhand der zur Verfügung stehenden Daten automatisiert berechnet. Das Steuerprogramm der Steuereinrichtung 30 berechnet somit unter anderem auf Basis der gespeicherten Produktionsprozessdaten, was aus welchem verbindungsstellenfreien Rollenwaren-Dichtband 1 hergestellt werden soll.

Beispielsweise besteht die Möglichkeit, einzelne Einzelteil- bzw. Fertigteil-Dichtbänder 32 für den Einzelteilbedarf bzw. Fertigteilbedarf aus dem verbindungsstellenfreien Rollenwaren-Dichtband 1 heraus zu schneiden. Oder es kann eine Rollenware hergestellt werden, indem zwei Enden von Rollenwaren-Dichtbändern 1, vorzugsweise mittels eines Filmstoßes, zu einem Rollenwaren-Dichtband 33 mit Verbindungsstellen miteinander verbunden werden. Dabei können, falls notwendig, Bereiche mit nicht tolerierbaren Fehlern herausgeschnitten werden und die entstandenen Teilstücke wieder zu dem Rollenwaren-Dichtband 33 mit Verbindungsstellen verbunden werden. Ob ein Dichtband 33 mit Verbindungsstellen hergestellt werden kann hängt auch davon ab, wie wieviel Verbindungsstellen pro Länge zulässig sind. Dies wird zuvor festgelegt.

Somit wird von dem Steuerprogramm der Steuereinrichtung 30 anhand der aus dem Herstellprozess zur Verfügung stehenden Produktionsprozessdaten und weiteren Vorgaben berechnet, ob und welche Fertigteil-Dichtbänder 32 und/oder Rollenwaren-Dichtbänder 33 mit Verbindungsstellen aus dem fehlerhaften, verbindungsstellenfreien Rollenwaren-Dichtband 1 hergestellt werden sollen.

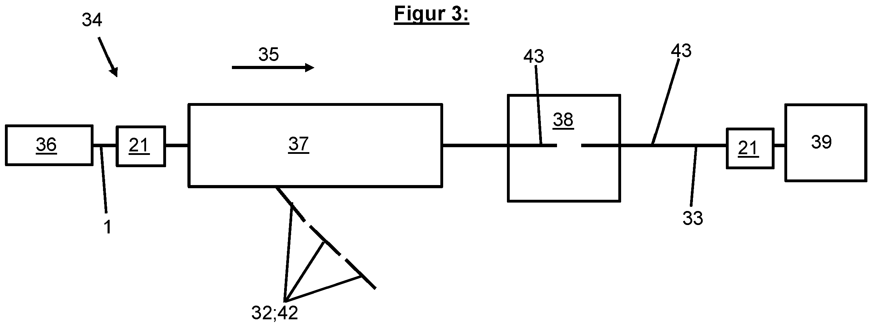

Im Falle der Fertigteil-Dichtbänder 32 wird zudem berechnet, an welchen Stellen die Fertigteil-Dichtbänder 32 aus dem fehlerhaften Rollenwaren-Dichtband 1 herausgeschnitten werden sollen. Auch wird z.B. die Lage der Bohrungen, insbesondere der Wassereinlauf/-ablaufbohrungen, und die Länge die Beschriftung festgelegt. Im Fall des Rollenwaren-Dichtbands 33 mit Verbindungsstellen wird zudem berechnet, falls notwendig, an welchen Stellen fehlerhafte Bereiche aus dem fehlerhaften Rollenwaren-Dichtband 1 herausgeschnitten werden sollen. Die Position der Schnittstellen wird jeweils anhand der Codes 45;46;47 definiert. Die entsprechende Datei mit dem jeweiligen Produktionsvorschlag wird dann von der Steuereinrichtung 30 zur Steuerung einer Weiterverarbeitungsanlage bzw. -linie 34 verwendet (Fig. 3). Die Datei enthält zudem Informationen bezüglich der Packstücknummer, Fertigungsauftragsnummer, Fehlergröße in Form der Fehlerklassifizierung, Uhrzeit des Start/Stop/Fehlers und/oder der Meterzahl.

Die Weiterverarbeitungsanlage 34 weist in eine Verarbeitungsrichtung 35 einander nachgeordnet eine Abwickelstation 36 mit einer Abwickeleinrichtung, eine Durchhangsteuerungsstation 21, eine Station zur Herstellung von Fertigteil-Dichtbändern 37 sowie eine Verbindungsstation 38 zum Verbinden von zwei freien Dichtbandenden miteinander, eine Durchhangsteuerungsstation 21 und eine Aufwickelstation 39 auf.

Die Station zur Herstellung von Fertigteil-Dichtbändern 37 weist vorzugsweise eine Bohrstation zum Einbringen von Bohrungen, bevorzugt von Wassereinlauf/-ablaufbohrungen, eine Beschriftungsstation zum Beschriften (Bauteilkennung), eine Zuschnittstation zum Zerteilen des verbindungsstellenfreien Rollenwaren-Dichtbands 1 und eine Auswerfstation zum Auswerfen des geschnittenen Einzelteil-Dichtbands 32 aus der Weiterverarbeitungsanlage 34 auf.

Im Folgenden wird nun die Weiterverarbeitung eines fehlerhaften Rollenwaren-Dichtbands 1 mittels der Weiterverarbeitungsanlage 34 erläutert:
Zu Beginn des Weiterverarbeitungsprozesses bzw. -verfahrens wird die das fehlerhafte, verbindungsstellenfreie Rollenwaren-Dichtband 1 aufweisende Vorratsrolle mitsamt der Transportbox in die Abwickelstation 36 eingelegt und dort die Chargennummer (Packstücknummer) des Etiketts gescannt. Dies erfolgt beispielsweise mit einem Handscanner. Der Anfang der Vorratsrolle wird ausgerichtet. Zudem wird das Rollenwaren-Dichtband 1, vorzugsweise bis zur Station zur Herstellung von Fertigteil-Dichtbändern 37 in die Weiterverarbeitungsanlage 34 eingezogen. Dies alles erfolgt beispielsweise manuell, kann aber auch automatisiert erfolgen.

Soll aus dem fehlerhaften Rollenwaren-Dichtband 1 ein zusammengesetztes Rollenwaren-Dichtband 33 mit Verbindungsstellen hergestellt werden, wird zudem, insbesondere manuell, eine Vorratsrolle in die Aufwickelstation 39 hineingestellt. Dies erfolgt ebenfalls manuell oder automatisiert.

Nun wird die Weiterverarbeitungsvorrichtung 34 gestartet.

In der Station zur Herstellung von Fertigteil-Dichtbändern 37 werden die sich auf dem Rollenwaren-Dichtband 1 befindlichen Codes 45;46;47 erkannt und auf Basis des vom Steuerprogramm der Steuereinrichtung 30 berechneten Produktionsvorschlags, falls notwendig, Dichtbandstücke 42 mit nicht tolerierbaren Fehlern in der Station zur Herstellung von Fertigteil-Dichtbändern 37 aus dem Rollenwaren-Dichtband 1 herausgeschnitten. Beim Schneiden wird das Rollenwaren-Dichtband 1 mit entsprechenden Mitteln fixiert. Zudem wird vorzugsweise die Anlage beim Zuschneiden gestoppt.

Die heraus geschnittenen Dichtbandstücke 42 werden aus der Station zur Herstellung von Fertigteil-Dichtbändern 37 ausgeschleust.

In der Station zur Herstellung von Fertigteil-Dichtbändern 37 werden zudem, falls gewünscht die Bohrungen, bevorzugt die Wassereinlauf/-ablaufbohrungen, in die der beim Schneiden entstandenen Dichtbandteilstücke 43 eingebracht.

Anschließend werden die freien Enden der beim Schneiden entstandenen Dichtbandteilstücke 43 in der Verbindungsstation 38 miteinander, insbesondere durch einen Filmstoß, verbunden. Das Verbinden der freien Enden ist an sich bekannt.

Am Ende der Weiterverarbeitungsvorrichtung 34 wird dann das aus den Dichtbandteilstücken 43 hergestellte, Verbindungsstellen aufweisende Rollenwaren-Dichtband 33 kontinuierlich auf die Vorratsrolle in der Aufwickelstation 39 aufgewickelt. Das freie Ende des Rollenwaren-Dichtbands 33 wird dabei zu Beginn des Wickelvorgangs manuell oder automatisiert in die Vorratsrolle eingefädelt. Die Wicklung wird lediglich während des Herausschneidens der Fehlstellen und/oder während des Verbindens der Dichtbandteilstücke 43 unterbrochen.

Ist das gesamte fehlerhafte Rollenwaren-Dichtband 1 verarbeitet und auf die Vorratsrolle aufgewickelt, wird der Prozess automatisiert gestoppt. Falls die gewünschte Länge des Rollenwaren-Dichtbands 33 noch nicht erreicht ist, wird ein weiteres fehlerhaftes Rollenwaren-Dichtband 1 verarbeitet, insofern die maximale Anzahl an Stoßstellen nicht überschritten wird.

Sobald das Rollenwaren-Dichtband 33 die gewünschte Länge erreicht hat, wird die Vorratsrolle, insbesondere mitsamt der Transportbox, manuell oder automatisiert aus der Aufwickelstation 39 entnommen.

Die Herstellung von Fertigteil-Dichtbändern 32 erfolgt wie folgt:
Zu Beginn der Station zur Herstellung von Fertigteil-Dichtbändern 37 werden die Codes 45;46;47 auf dem Rollenwaren-Dichtband 1 erfasst und auf Basis des Produktionsvorschlags das Rollenwaren-Dichtband 1 bearbeitet. Insbesondere wird das Rollenwaren-Dichtband 1 entsprechend des Produktionsvorschlages beschriftet, zugeschnitten, Bohrungen eingebracht und auf die gewünschte Länge zugeschnitten. Das zugeschnittene Fertigteil-Dichtband 32 wird dann aus der Station zur Herstellung von Fertigteil-Dichtbändern 37 ausgeleitet und beispielsweise auf einer Palette oder einem Profilständer gelagert. Sobald das Rollenwaren-Dichtband 1 vollständig verarbeitet ist, wird die Weiterverarbeitungsanlage 34 angehalten.

Dabei ist es selbstverständlich auch möglich, aus einem fehlerhaften Rollenwaren-Dichtband 1 sowohl Fertigteil-Dichtbänder 32 als auch ein Rollenwaren-Dichtband 33 mit Verbindungsstellen herzustellen.

Vorteil der erfindungsgemäßen, automatisierten, von dem Herstellverfahren getrennten Weiterverarbeitung ist zum einen, dass eine sehr genaue Qualitätskontrolle sowie eine effektive proaktive Abfallvermeidung möglich ist. Insbesondere ist exakt protokollierbar, an welcher Stelle des (Endlos)dichtbands 1a bzw. des hergestellten Rollenwaren-Dichtbands 1 welcher Fehler vorhanden ist. Dadurch können die fehlerhaften Bereiche auch in der Weiterverarbeitungsanlage 34 gezielt herausgeschnitten werden und die fehlerhaften Rollenwaren-Dichtbänder 1 exakt weiterverarbeitet werden. Denn die Weiterverarbeitungsanlage 34 hat die exakte Information, an welcher Längenposition, insbesondere auch zwischen welchen beiden Codes 45;46:47, die fehlerhafte Stelle vorhanden ist.

Dies ist ohne die Längenmarkierungen nicht ohne weiteres möglich, da aufgrund der Elastizität des Dichtbands 1 und des Schlupfes (insbesondere aufgrund des lackierten Dichtbands 1) sich bei der der Längenmessung in der Regel ein Fehler von ca. 5 Metern auf 1000 Meter Länge Dichtband ergibt.

Erfindungsgemäß werden jedoch die Längenmarkierungen, insbesondere an mehreren in die Verarbeitungsrichtung 35 einander nachgeordneten Stellen der Weiterverarbeitungsanlage 34, zur automatisierten Erfassung der Längenposition der verbindungsstellenfreien Rollenwaren-Dichtbänder 1 verwendet.

Die genaue Lage der fehlerhaften Stellen kann dann ohne weiteres anhand der Fördergeschwindigkeit des Rollenwaren-Dichtbands 1 in Kombination mit der Lage der Längenmarkierungen sehr genau berechnet werden.

Der Vorteil des erfindungsgemäßen Herstellungsverfahrens ist somit zudem, dass über den Offline-Weiterbearbeitungsprozess anhand der zur Verfügung stehenden Produktionsprozessdaten die Ausschussquote massiv reduziert und die Meterzahl des an späteren Anwender auslieferbaren Dichtmaterials dadurch im gleichen Maße signifikant erhöht werden kann. Aufgrund der sehr genauen Kennzeichnung und Protokollierung der Fehler ist es überhaupt erst möglich, wirtschaftlich aus dem "Wegwerfmaterial" wieder verkaufbare Dichtbänder herzustellen.

Aufgrund der Anbindung der Steuereinrichtung 30 an das ERP-System (Enterprise Resource Planning-System) ist zudem eine Chargenrückverfolgung möglich. Dadurch können auch spätere Reklamationen rückverfolgt werden.

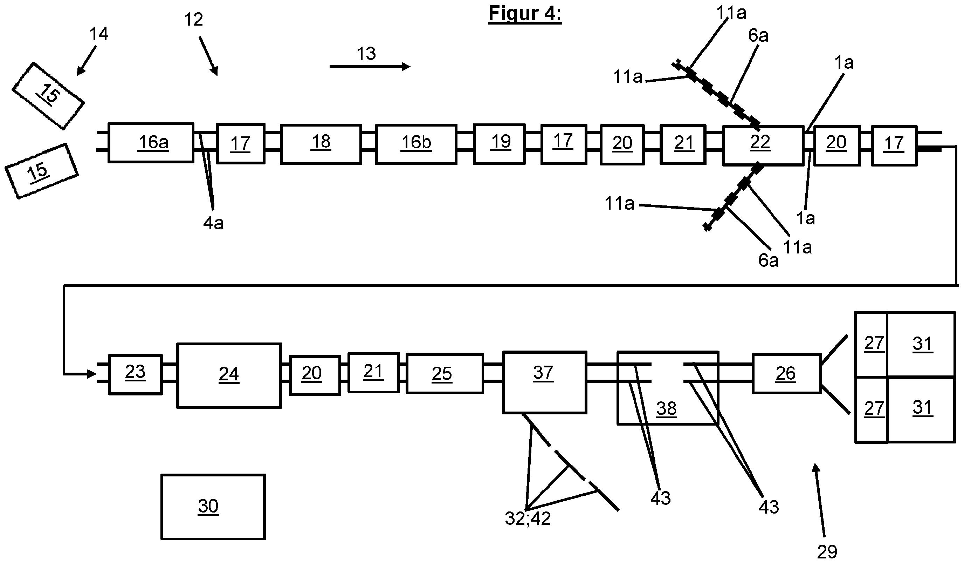

Figur 4 zeigt, wie bereits erläutert, eine weitere vorteilhafte Ausführungsform einer erfindungsgemäßen Vorrichtung 12a zur kontinuierlichen Herstellung von Dichtbändern 1 ;32;33. Bei der Vorrichtung 12a sind die Station zur Herstellung von Fertigteil-Dichtbändern 37 sowie die Verbindungsstation 38 zum Verbinden von zwei freien Dichtbandenden miteinander in die Vorrichtung 12a integriert. Die Station zur Herstellung von Fertigteil-Dichtbändern 37 und die Verbindungsstation 38 sind zwischen der Markierungsstation 24 und der Trennstation 26 angeordnet.

Mittels der Vorrichtung 12a können sowohl verbindungsstellenfreie Rollenwaren-Dichtbänder 1 als auch Rollenwaren-Dichtbänder 33 mit Verbindungsstellen und/oder Fertigteil-Dichtbänder 32 direkt aus dem Endlosdichtband 1a hergestellt werden. Diese werden dabei insbesondere direkt aus den Dichtbandabschnitten 48 hergestellt. Welche Art von Dichtbändern 1 ;32;33 hergestellt wird, wird wiederum von dem Steuerprogramm der Steuereinrichtung 30 unter anderem anhand der aus dem Herstellprozess zur Verfügung stehenden Produktionsprozessdaten und gegebenenfalls weiteren Vorgaben berechnet.

Durch die Kombinierung der Prozesse wird die Verarbeitungszeit des Herstellverfahrens reduziert. Zudem wird der Personalbedarf verringert und die Maschinenverfügbarkeit erhöht, bei gleichzeitig sinkenden Materialkosten durch den reduzierten Abfall.

Im Rahmen der Erfindung liegt es dabei auch, dass es sich bei dem herzustellenden Dichtband um ein anderes Dichtband, z.B. um ein Fassadendichtband zur Abdichtung von Fassaden, z.B. zur Abdichtung eines Spaltes zwischen einem plattenförmigem Element, z.B. einer Glasscheibe oder einem Paneel, und einem die Glasscheibe bzw. das Paneel haltenden Halteprofil, oder um ein Kederdichtband handelt.

Zudem liegt es im Rahmen der Erfindung, dass die Steuereinrichtung 30 nicht wie dargestellt als getrennte, zentrale Steuereinrichtung 30 ausgebildet ist, sondern in eine der anderen Einrichtungen, gegebenenfalls auch teilweise, integriert ist. Beispielsweise kann die Oberflächen- und Konturenprüfstation ebenfalls einen Teil der Steuerung des erfindungsgemäßen Verfahrens übernehmen. Die Steuereinrichtung kann zudem auch ausgelagert sein, z.B. durch Cloud Computing.

Auch liegt es im Rahmen der Erfindung, dass die Start- und Endcodes 45;46 nach jeweils vorbestimmten Längen aufgebracht werden, also nicht frühzeitig ein Endcode 46 gesetzt wird, auch wenn dies vorteilhaft ist, um Rollenwaren-Dichtbänder 1 herzustellen, die direkt weiter verwendet werden können. Auch müssen keine Start- und Endcodes 45;46 aufgebracht werden. In diesem Fall dienen die Längenmarkierungen dennoch in vorteilhafter Weise zur automatisierten Steuerung des Herstellungsverfahrens und auch bei der Weiterverarbeitung zur genauen Erkennung der Längenposition der Fehler.

## Patentansprüche

1. Verfahren zur kontinuierlichen Herstellung von Dichtbändern (1;32;33) aus einem einen Endlosprofilstrang (4a) aufweisenden Endlosdichtband (1a), vorzugsweise von Dichtbändern (1;32;33) zum Abdichten von mittels eines Schließelementes (2) schließbaren Öffnungen, insbesondere in Fahrzeugkarosserien (3), mit folgenden Verfahrensschritten:
a) Extrudieren des Endlosprofilstranges (4a),
b) Prüfen des Endlosdichtbands (1a) auf Oberflächen- und Konturenfehler in einer Oberflächen- und Konturenprüfstation (23) und Protokollierung der Längenposition der festgestellten Oberflächen- und Konturenfehler auf dem Endlosdichtband (1a),
wobei aus dem geprüften Endlosdichtband (1a) einzelne Fertigteil-Dichtbänder (32) und/oder auf eine Vorratsrolle aufgewickelte Rollenwaren-Dichtbänder (1;33) hergestellt werden,
wobei auf das Endlosdichtband (1a) in regelmäßigen Abständen Längenmarkierungen aufgebracht werden, wobei als Längenmarkierung ein Code aufgebracht wird, und wobei das Endlosdichtband (1a) mittels der Längenmarkierungen in einzelne Dichtbandabschnitte (48) unterteilt wird,
**dadurch gekennzeichnet, dass**
das Verfahren mit einer Steuereinrichtung (30) gesteuert wird, und zur Unterteilung als Längenmarkierungen ein Startcode (45), ein Endcode (46) und dazwischen Längencodes (47) aufgebracht werden, wobei die Längencodes (47) jeweils eine Information über die Länge des Endlosdichtbands (1a) ab dem Startcode aufweisen, der Startcode (45) den Anfang eines Dichtbandabschnitts (48) und der Endcode (46) das Ende des Dichtbandabschnitts (48) markieren.

2. Verfahren nach Anspruch 1,
**dadurch gekennzeichnet, dass**
mittels der Steuereinrichtung (30) Produktionsprozessdaten des Herstellverfahrens kontinuierlich automatisiert protokolliert werden, und das Verfahren unter Verwendung der protokollierten Oberflächen- und Konturenfehler und weiterer Produktionsprozessdaten derart automatisiert überwacht und gesteuert wird, dass Oberflächen- und Konturenfehler reduziert werden und/oder die Qualität des Verfahrens verbessert wird.

3. Verfahren nach Anspruch 2,
**dadurch gekennzeichnet, dass**
von einem Steuerprogramm der Steuereinrichtung (30) automatisiert unter Verwendung der laufend protokollierten Produktionsprozessdaten Vorhersagen getroffen werden und auf Basis der Vorhersagen das Verfahren gesteuert wird, insbesondere Gegenmaßnahmen eingeleitet werden, indem Prozessparameter angepasst werden.

4. Verfahren nach Anspruch 2 oder 3,
**dadurch gekennzeichnet, dass**
es sich bei den weiteren Produktionsprozessdaten unter anderem um den Extrusionsdruck und/oder die Materialtemperatur beim Extrudieren und/oder die Extrusionsgeschwindigkeit und/oder Informationen über die verwendeten Materialien und/oder die Fördergeschwindigkeit und/oder Vulkanisationsparameter und/oder die Extruderdrehzahl handelt,
wobei vorzugsweise die Steuereinrichtung (30) mit einem ERP-System (Enterprise Resource Planning-System) in Verbindung steht.

5. Verfahren nach einem der vorhergehenden Ansprüche,
**dadurch gekennzeichnet, dass**
Dichtbänder (1;32;33) hergestellt werden, die Befestigungsmittel, vorzugsweise ein Klebeband (6), zur Befestigung des jeweiligen Dichtbandes (1;32;33) an dem abzudichtenden Element, bevorzugt dem Schließelement und/oder dem die Öffnung aufweisenden Element, aufweisen, wobei vorzugsweise das Klebeband (6) ein abziehbares Abdeckband (11a) aufweist und die Längenmarkierungen auf das Abdeckband (11a) aufgebracht werden.

6. Verfahren nach einem der vorhergehenden Ansprüche,
**dadurch gekennzeichnet, dass**
die Längenmarkierungen nach dem Prüfen des Endlosdichtbands (1a) aufgebracht werden.

7. Verfahren nach einem der vorhergehenden Ansprüche,
**dadurch gekennzeichnet, dass**
als Code ein QR-Code oder ein Strichcode oder ein elektrischer Code oder ein RFID (radio-frequency identification) Code oder ein magnetischer Code aufgebracht wird.

8. Verfahren nach einem der Ansprüche 3 bis 7,
**dadurch gekennzeichnet, dass**
mittels des Steuerprogramms unter Verwendung der von der Oberflächen- und Konturenprüfstation (23) festgestellten Fehler automatisiert die Länge der Dichtbandabschnitte (48) festgelegt wird, und/oder
die Position des Endcodes (46) unter anderem anhand der Anzahl und/oder der Art der von der Oberflächen- und Konturenprüfstation (23) festgestellten Fehler, mittels des Steuerprogramms automatisiert festgelegt wird.

9. Verfahren nach einem der vorhergehenden Ansprüche,
**dadurch gekennzeichnet, dass**
die Längenmarkierungen, nämlich der Startcode (45), der Endcode (46) sowie die Längencodes (47), automatisiert aufgebracht werden, und/oder
die Position der von der Oberflächen- und Konturenprüfstation (23) festgestellten Fehler in Relation zu den Längenmarkierungen, bevorzugt den Codes (45;46;47) protokolliert wird, und/oder
die Längenmarkierungen, insbesondere an mehreren in eine Produktionsrichtung (13) einander nachgeordneten Stellen, zur automatisierten Erfassung der Längenposition des Endlosdichtbands (1a) und/oder der Dichtbandabschnitte (48) verwendet werden, und/oder
automatisiert erfasst und verarbeitet wird, an welcher Längenposition in eine Längsrichtung (1b) des Endlosdichtbands (1a) gesehen die von der Oberflächen- und Konturenprüfstation (23) festgestellten Fehler positioniert sind, und/oder
die Größe der von der Oberflächen- und Konturenprüfstation (23) festgestellten Fehler automatisiert erfasst und verarbeitet wird, und/oder
die von der Oberflächen- und Konturenprüfstation (23) festgestellten Fehler automatisiert je nach Ausprägung in verschiedene Fehlerkategorien eingeteilt werden.

10. Verfahren nach Anspruch 3 und einem der Ansprüche 8 oder 9,
**dadurch gekennzeichnet, dass**
der Endcode (46) spätestens bei Erreichen einer vorbestimmten maximalen Länge eines herzustellenden verbindungsstellenfreien Rollenwaren-Dichtbands (1) aufgebracht wird, und/oder
entweder der Endcode vor Erreichen der vorbestimmten maximalen Länge des herzustellenden verbindungsstellenfreien Rollenwaren-Dichtbands (1) aufgebracht wird, wenn von der Steuereinrichtung (30) ein nicht tolerierbarer Fehler festgestellt wird,
oder der Endcode (46) vor Erreichen der vorbestimmten maximalen Länge des herzustellenden verbindungsstellenfreien Rollenwaren-Dichtbands (1) aufgebracht wird, wenn eine festgelegte maximale Anzahl von Fehlern pro Länge des Endlosdichtbands (1a) erreicht ist,
und/oder vom Steuerprogramm mittels Wahrscheinlichkeitsberechnungen anhand der Länge und der Anzahl der detektierten Fehler festgelegt wird, wann der Endcode (46) gesetzt wird.

11. Verfahren nach einem der vorhergehenden Ansprüche,
**dadurch gekennzeichnet, dass**
die Längenmarkierungen, insbesondere die Codes (45;46;47), zusätzlich zur Längeninformation eine oder mehrere der folgenden Informationen enthalten:
- Packstücknummer (Vorratsrollennummer)
- Fertigungsauftragsnummer
- Datum und Uhrzeit
- Hersteller-Kennzeichnung
- Artikelnummer
und/oder zumindest eine der folgenden Oberflächenfehlerarten detektiert werden:
Erhebungen, Blasen, Riefen, Lackfehler, Farbschattierungen oder Farbabweichungen
und/oder zumindest eine der folgenden Konturenfehlerarten detektiert werden:
vom Soll-Querschnitt abweichender Querschnitt oder von der Soll-Position abweichende Klebebandposition.

12. Verfahren nach einem der Ansprüche 2 bis 11,
**dadurch gekennzeichnet, dass**
zur Verbesserung der Qualität des Verfahrens von dem Steuerprogramm der Steuereinrichtung (30) automatisiert unter Verwendung der laufend protokollierten Produktionsprozessdaten Vorhersagen bezüglich des Auftretens von Anlagenstörungen getroffen werden und auf Basis der Vorhersagen das Verfahren gesteuert, wird, insbesondere Gegenmaßnahmen gegen das Auftreten der Anlagenstörungen eingeleitet werden, indem Prozessparameter angepasst werden.

13. Verfahren nach einem der vorhergehenden Ansprüche
**dadurch gekennzeichnet, dass**
aus dem Endlosdichtband (1a), insbesondere den Dichtbandabschnitten (48), verbindungsstellenfreie Rollenwaren-Dichtbänder (1) und/oder Rollenwaren-Dichtbänder (33) mit Verbindungsstellen und/oder Einzelteil-Dichtbänder (32) hergestellt werden,
wobei vorzugsweise unter anderem unter Verwendung der Produktionsprozessdaten bezüglich der Lage und der Anzahl und/oder der Art der von der Oberflächen- und Konturenprüfstation (23) festgestellten Fehler mittels des nach Anspruch 2 verwendeten Steuerprogramms automatisiert berechnet wird, ob und welche Einzelteil-Dichtbänder (32) und/oder Rollenwaren-Dichtbänder (1;33) aus dem Endlosdichtband (1a), insbesondere aus den Dichtbandabschnitten (48), hergestellt werden, und
wobei vorzugsweise die Herstellung der Einzelteil-Dichtbänder (32) und/oder der Rollenwaren-Dichtbänder (1;33) automatisiert auf Basis der Berechnung erfolgt, und/oder
wobei vorzugsweise bei der Herstellung der Einzelteil-Dichtbänder (32) die Einzelteil-Dichtbänder (32) von dem Endlosdichtband (1a), insbesondere von den Dichtbandabschnitten (48), in gewünschter Länge abgeschnitten werden, und/oder
wobei vorzugsweise bei der Herstellung der Rollenwaren-Dichtbänder (33) mit Verbindungsstellen Dichtbandteilstücke (43) aus dem Endlosdichtband (1a), insbesondere aus den Dichtbandabschnitten (48), miteinander verbunden werden, und/oder
wobei vorzugsweise die verbindungsstellenfreien Rollenwaren-Dichtbänder (1) jeweils aus einem Dichtbandabschnitt (48) bestehen.

14. Verfahren nach einem der Ansprüche 1 bis 11,
**dadurch gekennzeichnet, dass**
aus dem Endlosdichtband (1a) ausschließlich verbindungsstellenfreie Rollenwaren-Dichtbänder (1) hergestellt werden, wobei vorzugsweise aus jedem Dichtbandabschnitt (48) ein verbindungsstellenfreies Rollenwaren-Dichtband (1) hergestellt wird.

15. Verfahren nach Anspruch 14,
**dadurch gekennzeichnet, dass**
aus zumindest einem Teil der verbindungsstellenfreien Rollenwaren-Dichtbänder (1) Einzelteil-Dichtbänder (32) und/oder Rollenwaren-Dichtbänder (33) mit Verbindungsstellen hergestellt werden,
wobei vorzugsweise unter Verwendung der aus dem Herstellprozess zur Herstellung der verbindungsstellenfreien Rollenwaren-Dichtbänder (1) zur Verfügung stehenden Produktionsprozessdaten, insbesondere unter Verwendung der Daten bezüglich der Lage und der Anzahl und/oder der Art der von der Oberflächen- und Konturenprüfstation (23) festgestellten Fehler, mittels des Steuerprogramms automatisiert berechnet wird, ob und welche Einzelteil-Dichtbänder (32) und/oder Rollenwaren-Dichtbänder (33) mit Verbindungsstellen aus den verbindungsstellenfreien Rollenwaren-Dichtbändern (1) hergestellt werden,
wobei vorzugsweise die Herstellung der Einzelteil-Dichtbänder (32) und/oder der Rollenwaren-Dichtbänder (33) mit Verbindungsstellen automatisiert auf Basis der Berechnung erfolgt.

16. Verfahren nach Anspruch 15,
**dadurch gekennzeichnet, dass**
bei der Herstellung der Einzelteil-Dichtbänder (32) die Einzelteil-Dichtbänder (32) von dem verbindungsstellenfreien Rollenwaren-Dichtband (1) in gewünschter Länge abgeschnitten werden, und/oder
bei der Herstellung der Rollenwaren-Dichtbänder (33) mit Verbindungsstellen Dichtbandteilstücke (43) aus verbindungsstellenfreien Rollenwaren-Dichtbändern (1) miteinander verbunden werden, und/oder
die Längenmarkierungen (45;46;47), insbesondere an mehreren in eine Verarbeitungsrichtung (35) einander nachgeordneten Stellen, zur automatisierten Erfassung der Längenposition der Rollenwaren-Dichtbänder (1) verwendet werden.

17. Vorrichtung (12;12a) zur kontinuierlichen Herstellung eines Dichtbandes (1;32;33), vorzugsweise zum Abdichten von mittels eines Schließelementes (2) schließbaren Öffnungen, insbesondere in Fahrzeugkarosserien (3), vorzugsweise Vorrichtung (12) zur Durchführung des Verfahrens gemäß einem der vorhergehenden Ansprüche, aufweisend:
a) Eine Extrusionsstation (14) zum Extrudieren mindestens eines Endlosprofilstranges (4a),
b) Vorzugsweise eine Laminierstation (22) zum Verbinden des mindestens einen Endlosprofilstranges (4a) mit einem durch ein Endlosabdeckband (11a) abgedecktem Endlosklebeband (6a) zu einem Endlosdichtband (1a),
c) eine Oberflächen- und Konturenprüfstation (23) zum Prüfen des mindestens einen Endlosdichtbands (1a) auf Oberflächen- und Konturenfehler,
d) eine Aufwickelstation (29) zum Aufwickeln des mindestens einen Endlosdichtbands (1a) auf eine Vorratsrolle und Abtrennen des Endlosdichtbands (1a) nach Erreichen der gewünschten Länge,
e) eine Steuereinrichtung (30) zur Steuerung des Herstellungsverfahrens,
f) eine der Oberflächen- und Konturenprüfstation (23) nachgeordnete Markierungsstation (24) zum Aufbringen einer regelmäßigen Längenmarkierung in Form eines Codes auf das Endlosdichtband (1a), wobei das Endlosdichtband (1a) mittels der Längenmarkierungen in einzelne Dichtbandabschnitte (48) unterteilbar ist,
**dadurch gekennzeichnet, dass**
die Steuereinrichtung (30) eingerichtet ist, um die Markierungsstation (24) zu aktivieren, wobei mit der Markierungsstation (24) zur Unterteilung als Längenmarkierungen ein Startcode (45), ein Endcode (46) und dazwischen Längencodes (47) aufbringbar sind, wobei die Längencodes (47) jeweils eine Information über die Länge des Endlosdichtbands (1a) ab dem Startcode aufweisen, der Startcode (45) den Anfang eines Dichtbandabschnitts (48) und der Endcode (46) das Ende des Dichtbandabschnitts (48) markieren.

## Claims

1. Method for the continuous production of sealing strips (1; 32; 33) from an endless sealing strip (1a) having an endless profile strand (4a), preferably of sealing strips (1; 32; 33) for sealing openings that can be closed by means of a closing element (2), in particular in vehicle bodies (3), having the following method steps:
a) Extruding the endless profile strand (4a),
b) Checking the endless sealing strip (1a) for surface and contour defects in a surface and contour inspection station (23) and recording the length position of the surface and contour defects found on the endless sealing strip (1a),
wherein individual finished part sealing strips (32) and/or rolled goods sealing strips (1; 33) wound onto a supply roll are produced from the checked endless sealing strip (1a),
wherein length markings are applied to the endless sealing strip (1a) at regular intervals, wherein a code is applied as the length marking, and
wherein the endless sealing strip (1a) is divided into individual sealing strip sections (48) by means of the length markings,
**characterized in that**
the method is controlled by a control device (30), and for subdivision as length markings a start code (45), an end code (46) and length codes (47) in between are applied, wherein the length codes (47) each comprise information about the length of the endless sealing strip (1a) from the start code, the start code (45) marks the beginning of a sealing strip section (48) and the end code (46) marks the end of the sealing strip section (48).

2. Method according to claim 1,
**characterized in that**
production process data of the manufacturing method are continuously automatically recorded by means of the control device (30), and the method is automatically monitored and controlled using the recorded surface and contour defects and further production process data such that surface and contour defects are reduced and/or the quality of the method is improved.

3. Method according to claim 2,
**characterized in that**
predictions are made automatically by a control program of the control device (30) using the continuously recorded production process data and the method is controlled on the basis of the predictions, in particular countermeasures are initiated by adjusting process parameters.

4. Method according to claim 2 or 3,
**characterized in that**
the further production process data include amongst others the extrusion pressure and/or the material temperature during extrusion and/or the extrusion speed and/or information about the materials used and/or the conveying speed and/or vulcanization parameters and/or the extruder speed, wherein preferably the control device (30) is connected to an ERP system (Enterprise Resource Planning system).

5. Method according to one of the preceding claims, **characterized in that**
sealing strips (1; 32; 33) having fastening means, preferably an adhesive tape (6), for fastening the respective sealing strip (1; 32; 33) to the element to be sealed, preferably the closing element and/or the element having the opening, are produced, wherein preferably the adhesive tape (6) comprises a removable cover tape (11a) and the length markings are applied to the cover tape (11a).

6. Method according to one of the preceding claims,
**characterized in that**
the length markings are applied after the checking of the endless sealing strip (1a).

7. Method according to one of the preceding claims,
**characterized in that**
a QR code or a bar code or an electrical code or an RFID (radio frequency identification) code or a magnetic code is applied as the code.

8. Method according to one of claims 3 to 7,
**characterized in that**
the length of the sealing strip sections (48) is determined automatically by means of the control program using the defects detected by the surface and contour inspection station (23), and/or
the position of the end code (46) is determined automatically by means of the control program on the basis of the number and/or the type of defects detected by the surface and contour inspection station (23), among other things.

9. Method according to one of the preceding claims,
**characterized in that**
the length markings, namely the start code (45), the end code (46) and the length codes (47), are applied automatically, and/or
the position of the defects detected by the surface and contour inspection station (23) is recorded in relation to the length markings, preferably the codes (45; 46; 47), and/or
the length markings are used, in particular at a plurality of locations downstream of one another in a production direction (13), for the automated detection of the length position of the endless sealing strip (1a) and/or the sealing strip sections (48), and/or
it is automatically detected and processed at which length position seen in a length direction (1b) of the endless sealing strip (1a) the defects detected by the surface and contour inspection station (23) are positioned, and/or
the size of the defects detected by the surface and contour inspection station (23) is automatically determined and processed, and/or
the defects detected by the surface and contour inspection station (23) are automatically divided into different defect categories depending on their severity.

10. Method according to claim 3 and one of claims 8 or 9,
**characterized in that**
the end code (46) is applied at the latest when a predetermined maximum length of a joint-free rolled goods sealing strip (1) to be produced is reached, and/or
either the end code is applied before the predetermined maximum length of the joint-free rolled goods sealing strip (1) to be produced is reached if the control device (30) detects an intolerable defect,
or the end code (46) is applied before the predetermined maximum length of the joint-free rolled goods sealing strip (1) to be produced is reached if a specified maximum number of defects per length of the endless sealing strip (1a) has been reached,
and/or it is determined by the control program when the end code (46) is to be set by means of probability calculations based on the length and number of detected defects.

11. Method according to one of the preceding claims,
**characterized in that**
the length markings, in particular the codes (45;46;47), comprise one or more of the following information in addition to the length information:
- Package number (supply roll number)
- Production order number
- Date and time
- Manufacturer identification
- Item number
and/or at least one of the following types of surface defects are detected:
elevations, bubbles, grooves, paint defects, color shades or color deviations
and/or at least one of the following types of contour defects are detected:
cross-section deviating from the desired cross-section or adhesive tape position deviating from the desired position.

12. Method according to one of claims 2 to 11,
**characterized in that**
in order to improve the quality of the method, the control program of the control device (30) automatically makes predictions regarding the occurrence of system faults using the continuously recorded production process data, and the method is controlled on the basis of the predictions, in particular countermeasures against the occurrence of the system faults are initiated, by adjusting process parameters.

13. Method according to one of the preceding claims,
**characterized in that**
from the endless sealing strip (1a), in particular the sealing strip sections (48), joint-free rolled goods sealing strips (1) and/or rolled goods sealing strips (33) having joints and/or single part sealing strips (32) are produced,
wherein preferably by means of the control program used according to claim 2 amongst others by using the production process data regarding the position and the number and/or the type of defects detected by the surface and contour inspection station (23), it is automatically calculated whether and which single part sealing strips (32) and/or rolled goods sealing strips (1; 33) are produced from the endless sealing strip (1a), in particular from the sealing strip sections (48), and
wherein preferably the production of the single part sealing strips (32) and/or the rolled goods sealing strips (1; 33) takes place automatically on the basis of the calculation, and/or
wherein preferably during the production of the single part sealing strips (32), the single part sealing strips (32) are cut off the endless sealing strip (1a), in particular from the sealing strip sections (48), to the desired length, and/or
wherein preferably during the production of the rolled goods sealing strips (33) having joints, sealing strip segments (43) from the endless sealing strip (1a), in particular from the sealing strip sections (48), are connected to one another, and/or
wherein preferably the joint-free rolled goods sealing strips (1) each consist of a sealing strip section (48).

14. Method according to one of claims 1 to 11,
**characterized in that**
only joint-free rolled goods sealing strips (1) are produced from the endless sealing strip (1a), wherein preferably from each sealing strip section (48) a joint-free rolled goods sealing strip (1) is produced.

15. Method according to claim 14,
**characterized in that**
from at least a part of the joint-free rolled goods sealing strips (1), single part sealing strips (32) and/or rolled goods sealing strips (33) having joints are produced,
wherein preferably by means of the control program using the production process data available from the production process for the production of the joint-free rolled goods sealing strips (1), in particular using the data regarding the position and the number and/or the type of the defects detected by the surface and contour inspection station (23), it is automatically calculated whether and which single part sealing strips (32) and/or rolled goods sealing strips (33) having joints are produced from the joint-free rolled goods sealing strips (1),
wherein preferably the production of the single part sealing strips (32) and/or the rolled goods sealing strips (33) having joints takes place automated on the basis of the calculation.

16. Method according to claim 15,
**characterized in that**
during the production of the single part sealing strips (32), the single part sealing strips (32) are cut to the desired length from the joint-free rolled goods sealing strip (1), and/or
during the production of the rolled goods sealing strips (33) having joints, sealing strip segments (43) from joint-free rolled goods sealing strips (1) are connected to one another, and/or
the length markings (45; 46; 47), in particular at a plurality of locations downstream of one another in a processing direction (35), are used for the automated detection of the length position of the rolled goods sealing strips (1).

17. Device (12; 12a) for continuous production of a sealing strip (1; 32; 33), preferably for sealing openings that can be closed by means of a closing element (2), in particular in vehicle bodies (3), preferably device (12) for carrying out the method according to one of the preceding claims, comprising:
a) an extrusion station (14) for extruding at least one endless profile strand (4a),
b) preferably a laminating station (22) for connecting the at least one endless profile strand (4a) to an endless adhesive tape (6a) covered by an endless cover tape (11a) to form an endless sealing strip (1a),
c) a surface and contour inspection station (23) for checking the at least one endless sealing strip (1a) for surface and contour defects,
d) a winding station (29) for winding the at least one endless sealing strip (1a) onto a supply roll and cutting off the endless sealing strip (1a) after the desired length has been reached,
e) a control device (30) for controlling the production process,
f) a marking station (24) downstream of the surface and contour inspection station (23) for applying a regular length marking in the form of a code to the endless sealing strip (1a), wherein the endless sealing strip (1a) is dividable into individual sealing strip sections (48) by means of the length markings,
**characterized in that**
the control device (30) is set up to activate the marking station (24), wherein with the marking station (24) for subdivision as length markings a start code (45), an end code (46) and length codes (47) in between can be applied, wherein the length codes (47) each have information about the length of the endless sealing strip (1a) from the start code, the start code (45) marks the beginning of a sealing strip section (48) and the end code (46) marks the end of the sealing strip section (48).

## Revendications

1. Procédé de fabrication en continu de bandes d'étanchéité (1;32;33) à partir d'une bande d'étanchéité sans fin (1a) comprenant un cordon de profilé sans fin (4a), de préférence de bandes d'étanchéité (1;32;33) pour étancher des ouvertures pouvant être fermées au moyen d'un élément de fermeture (2), en particulier dans des carrosseries de véhicules (3), comprenant les étapes de procédé suivantes:
a) Extruder le cordon de profilé sans fin (4a),
b) Inspecter la bande d'étanchéité sans fin (1a) pour détecter des défauts de surface et de contour dans une station d'inspection de surface et de contour (23) et consigner la position en longueur des défauts de surface et de contour détectés sur la bande d'étanchéité sans fin (1a),
des bandes d'étanchéité préfabriquées individuelles (32) et/ou des bandes d'étanchéité en rouleaux (1;33) enroulées sur un rouleau de stock étant fabriquées à partir de la bande d'étanchéité sans fin (1a),
des marquages de longueur étant appliqués à intervalles réguliers sur la bande d'étanchéité sans fin (1a), un code étant appliqué comme marquage de longueur, et la bande d'étanchéité sans fin (1a) étant divisée en sections de bande d'étanchéité individuelles (48) au moyen des marquages de longueur,
**caractérisé en ce que**
le procédé est contrôlé avec un dispositif de contrôle (30), et pour la division, on applique comme marquages de longueur un code de début (45), un code de fin (46) et des codes de longueur (47) entre ceux-ci, les codes de longueur (47) comprenant chacun une information sur la longueur de la bande d'étanchéité sans fin (1a) à partir du code de début, le code de début (45) marquant le début d'une section de bande d'étanchéité (48) et le code de fin (46) marquant la fin de la section de bande d'étanchéité (48).

2. Procédé selon la revendication 1,
**caractérisé en ce que**
au moyen du dispositif de contrôle (30), des données de processus de production du procédé de fabrication sont consignées en continu de manière automatisée, et le procédé est surveillé et contrôlé de manière automatisée en utilisant les défauts de surface et de contour consignés et d'autres données de processus de production de telle sorte que les défauts de surface et de contour soient réduits et/ou que la qualité du procédé soit améliorée.

3. Procédé selon la revendication 2,
**caractérisé en ce que**
des prédictions sont faites de manière automatisée par un programme de contrôle du dispositif de contrôle (30) en utilisant les données de processus de production consignées en permanence et le procédé est contrôlé sur la base des prédictions, en particulier des contre-mesures sont introduites en adaptant des paramètres de processus.

4. Procédé selon la revendication 2 ou 3,
**caractérisé en ce que**
il s'agit, pour les autres données du processus de production, entre autres, de la pression d'extrusion et/ou de la température du matériau lors de l'extrusion et/ou de la vitesse d'extrusion et/ou d'informations sur les matériaux utilisés et/ou de la vitesse de transport et/ou des paramètres de vulcanisation et/ou de la vitesse de rotation de l'extrudeuse, de préférence, le dispositif de contrôle (30) étant en liaison avec un système ERP (système Enterprise Resource Planning).

5. Procédé selon l'une quelconque des revendications précédentes,
**caractérisé en ce que**
des bandes d'étanchéité (1 ;32;33) sont fabriquées, qui comprennent des moyens de fixation, de préférence une bande adhésive (6), pour la fixation de la bande d'étanchéité (1;32;33) respective sur l'élément à rendre étanche, de préférence sur l'élément de fermeture et/ou l'élément comprenant l'ouverture,
la bande adhésive (6) comprenant de préférence une bande de recouvrement (11a) détachable et les marquages de longueur étant appliqués sur la bande de recouvrement (11a).

6. Procédé selon l'une quelconque des revendications précédentes,
**caractérisé en ce que**
les marquages de longueur sont appliqués après la inspection de la bande d'étanchéité sans fin (1a).

7. Procédé selon l'une quelconque des revendications précédentes,
**caractérisé en ce que**
comme code un code QR ou un code à barres ou un code électrique ou un code RFID (radio-frequency identification) ou un code magnétique est appliqué.

8. Procédé selon l'une des revendications 3 à 7,
**caractérisé en ce que**
la longueur des sections de bande d'étanchéité (48) est déterminée de manière automatisée au moyen du programme de contrôle en utilisant les défauts constatés par la station d'inspection de surface et de contour (23), et/ou
la position du code de fin (46) est déterminée de manière automatisée au moyen du programme de contrôle, entre autres à l'aide du nombre et/ou du type de défauts constatés par la station d'inspection de surface et de contour (23).

9. Procédé selon l'une quelconque des revendications précédentes,
**caractérisé en ce que**
les marquages de longueur, à savoir le code de début (45), le code de fin (46) ainsi que les codes de longueur (47), sont appliqués de manière automatisée, et/ou
la position des défauts constatés par la station d'inspection de surface et de contour (23) est consignée par rapport aux marquages de longueur, de préférence aux codes (45;46;47), et/ou
les marquages de longueur sont utilisés, en particulier à plusieurs endroits situés en aval les uns des autres dans une direction de production (13), pour la détection automatisée de la position en longueur de la bande d'étanchéité sans fin (1a) et/ou des sections de bande d'étanchéité (48), et/ou
on détecte et on traite de manière automatisée à quelle position de longueur, vue dans une direction longitudinale (1b) de la bande d'étanchéité sans fin (1a), sont positionnés les défauts détectés par la station d'inspection de surface et de contour (23), et/ou
la taille des défauts détectés par la station d'inspection de surface et de contour (23) est détectée et traitée de manière automatisée, et/ou
les défauts constatés par la station d'inspection des surfaces et des contours (23) sont classés de manière automatisée dans différentes catégories de défauts en fonction de leur modalité.

10. Procédé selon la revendication 3 et l'une des revendications 8 ou 9,
**caractérisé en ce que**
le code de fin (46) est appliqué au plus tard lorsqu'une longueur maximale prédéterminée d'une bande d'étanchéité (1) en rouleaux sans point de jonction à fabriquer est atteinte, et/ou
soit le code de fin est appliqué avant que la longueur maximale prédéterminée de la bande d'étanchéité (1) en rouleau sans point de jonction à fabriquer ne soit atteinte, lorsqu'une défaut non tolérable est détectée par le dispositif de contrôle (30),
ou le code de fin (46) est appliqué avant d'atteindre la longueur maximale prédéterminée de la bande d'étanchéité (1) en rouleau sans point de jonction à fabriquer, lorsqu'un nombre maximal fixé de défauts par longueur de la bande d'étanchéité sans fin (1a) est atteint,
et/ou le moment où le code final (46) est établi est déterminé par le programme de contrôle, au moyen de calculs de probabilité basés sur la longueur et le nombre des défauts détectées.

11. Procédé selon l'une quelconque des revendications précédentes,
**caractérisé en ce que**
les marquages de longueur, en particulier les codes (45;46;47), contiennent, en plus de l'information de longueur, une ou plusieurs des informations suivantes :
- Numéro de colis (numéro de rouleau de stock)
- Numéro d'ordre de fabrication
- Date et heure
- Marquage du fabricant
- Numéro d'article
et/ou au moins l'un des types de défauts de surface suivants est détecté:
des bosses, des bulles, des stries, des défauts de peinture, des nuances ou des variations de couleur
et/ou au moins l'un des types de défauts de contour suivants est détecté:
coupe transversale différente de la coupe transversale théorique ou position de la bande adhésive différente de la position théorique.

12. Procédé selon l'une des revendications 2 à 11,
**caractérisé en ce que**
pour améliorer la qualité du procédé, le programme de contrôle du dispositif de contrôle (30) effectue de manière automatisée, en utilisant les données de processus de production consignées en permanence, des prédictions concernant l'apparition de perturbations de l'installation et, sur la base des prédictions, le procédé est contrôlé, en particulier des contre-mesures sont introduites contre l'apparition des perturbations de l'installation en adaptant des paramètres de processus.

13. Procédé selon l'une des revendications précédentes
**caractérisé en ce que**
à partir de la bande d'étanchéité sans fin (1a), en particulier à partir des sections de bande d'étanchéité (48), on fabrique des bandes d'étanchéité en rouleaux (1) sans points de jonction et/ou des bandes d'étanchéité en rouleaux (33) avec points de jonction et/ou des bandes d'étanchéité de pièces individuelles (32),
de préférence en utilisant, entre autres, les données de processus de production concernant la position et le nombre et/ou le type de défauts détectés par la station d'inspection de surface et de contour (23), à l'aide du programme de contrôle utilisé selon la revendication 2, on calcule de manière automatisée, si et quelles bandes d'étanchéité de pièces individuelles (32) et/ou bandes d'étanchéité de produits en rouleaux (1;33) sont fabriquées à partir de la bande d'étanchéité sans fin (1a), en particulier à partir des sections de bande d'étanchéité (48), et
la fabrication des bandes d'étanchéité de pièces individuelles (32) et/ou des bandes d'étanchéité en rouleaux (1;33) étant de préférence automatisée sur la base du calcul, et/ou
de préférence, lors de la fabrication des bandes d'étanchéité de pièces individuelles (32), les bandes d'étanchéité de pièces individuelles (32) étant coupées à la longueur souhaitée à partir de la bande d'étanchéité sans fin (1a), en particulier à partir des sections de bande d'étanchéité (48), et/ou
où, de préférence, lors de la fabrication des bandes d'étanchéité en rouleaux (33) avec des points de jonction, des parties de bande d'étanchéité (43) provenant de la bande d'étanchéité sans fin (1a), en particulier des sections de bande d'étanchéité (48), sont reliées entre elles, et/ou
de préférence, les bandes d'étanchéité en rouleaux (1) sans points de jonction étant constituées chacune d'une section de bande d'étanchéité (48).

14. Procédé selon l'une des revendications 1 à 11,
**caractérisé en ce que**
on fabrique à partir de la bande d'étanchéité sans fin (1a) exclusivement des bandes d'étanchéité en rouleaux (1) sans points de jonction, une bande d'étanchéité en rouleaux (1) sans points de jonction étant de préférence fabriquée à partir de chaque section de bande d'étanchéité (48).

15. Procédé selon la revendication 14,
**caractérisé en ce que**
à partir d'au moins une partie des bandes d'étanchéité en rouleaux (1) sans points de jonction, on fabrique des bandes d'étanchéité de pièces individuelles (32) et/ou des bandes d'étanchéité en rouleaux (33) avec des points jonction,
de préférence en utilisant les données de processus de production disponibles à partir du processus de fabrication pour la fabrication des bandes d'étanchéité de produits en rouleaux (1) sans points de jonction, en particulier en utilisant les données concernant la position et le nombre et/ou le type des défauts constatés par la station d'inspection de surface et de contour (23), on calcule de manière automatisée au moyen du programme de contrôle si et quelles bandes d'étanchéité de pièces individuelles (32) et/ou bandes d'étanchéité en rouleaux (33) avec points de jonction sont fabriquées à partir des bandes d'étanchéité en rouleaux (1) sans points de jonction,
la fabrication des bandes d'étanchéité de pièces individuelles (32) et/ou des bandes d'étanchéité en rouleaux (33) avec des points de jonction étant de préférence automatisée sur la base du calcul.

16. Procédé selon la revendication 15,
**caractérisé en ce que**
lors de la fabrication des bandes d'étanchéité de pièces individuelles (32), les bandes d'étanchéité de pièces individuelles (32) sont coupées à la longueur souhaitée à partir de la bande d'étanchéité de produits en rouleau (1) sans points de jonction, et/ou
lors de la fabrication des bandes d'étanchéité en rouleaux (33) avec des points de jonction, des parties de bande d'étanchéité (43) sont reliées entre elles à partir de bandes d'étanchéité en rouleaux (1) sans points de jonction, et/ou
les marquages de longueur (45;46;47) sont utilisés, en particulier à plusieurs endroits situés en aval les uns des autres dans une direction de traitement (35), pour la détection automatisée de la position de longueur des bandes d'étanchéité en rouleaux (1).

17. Dispositif (12;12a) pour la fabrication en continu d'une bande d'étanchéité (1 ;32;33), de préférence pour l'étanchéité d'ouvertures pouvant être fermées au moyen d'un élément de fermeture (2), en particulier dans des carrosseries de véhicules (3), de préférence dispositif (12) pour la réalisation du procédé selon l'une des revendications précédentes, comprenant:
a) une station d'extrusion (14) pour l'extrusion d'au moins un cordon de profilé sans fin (4a),
b) de préférence une station de laminage (22) pour relier le au moins un cordon de profilé sans fin (4a) à une bande adhésive sans fin (6a) recouverte par une bande de recouvrement sans fin (1 1a) pour former une bande d'étanchéité sans fin (1a),
c) une station d'inspection de surface et de contour (23) pour inspecter l'au moins une bande d'étanchéité sans fin (1a) pour des défauts de surface et de contour,
d) une station d'enroulement (29) pour enrouler la au moins une bande d'étanchéité sans fin (1a) sur un rouleau de stock et couper la bande d'étanchéité sans fin (1a) après avoir atteint la longueur souhaitée,
e) un dispositif de contrôle (30) pour contrôler le procédé de fabrication,
f) une station de marquage (24) disposé en aval de la station d'inspection de surface et de contour (23) pour appliquer un marquage de longueur régulier sous forme de code sur la bande d'étanchéité sans fin (1a), la bande d'étanchéité sans fin (1a) pouvant être divisée en sections de bande d'étanchéité individuelles (48) au moyen des marquages de longueur,
**caractérisé en ce que**
le dispositif de contrôle (30) est établi pour activer la station de marquage (24), un code de début (45), un code de fin (46) et des codes de longueur (47) entre ceux-ci pouvant être appliqués avec la station de marquage (24) pour la division en tant que marquages de longueur, les codes de longueur (47) comprenant chacun une information sur la longueur de la bande d'étanchéité sans fin (1a) à partir du code de début, le code de début (45) marquant le début d'une section de bande d'étanchéité (48) et le code de fin (46) marquant la fin de la section de bande d'étanchéité (48).
